# EUROPÄISCHE PATENTSCHRIFT

(11) **EP 2 423 654 B1**
(45) Veröffentlichungstag und Bekanntmachung des Hinweises auf die Patenterteilung: **05.12.2012**
(21) Anmeldenummer: 10401151.5
(22) Anmeldetag: 26.08.2010
(51) Int. Cl.: G01H 13/00

(54) **Micromechanischer Sensor mit Bandpasscharakteristik**
Micromechanical sensor with bandpass characteristics
Capteur micromécanique doté d'une caractéristique de passage de bande

(43) Veröffentlichungstag der Anmeldung: 29.02.2012
(73) Patentinhaber: Technische Universität Chemnitz, 09126 Chemnitz (DE)
(72) Erfinder: Dienel, Marco, 09569 Oederan (DE); Sorger, Alexander, 09376 Oelsnitz (DE); Mehner, Jan, 09221 Neukirchen (DE)
(74) Vertreter: Steiniger, Carmen

(56) Entgegenhaltungen:
- US-A- 5 856 722
- DAI ET AL: "Simulation and fabrication of HF microelectromechanical bandpass filter", MICROELECTRONICS JOURNAL, MACKINTOSH PUBLICATIONS LTD. LUTON, GB, Bd. 38, Nr. 8-9, 1. August 2007 (2007-08-01), Seiten 828-833, XP022277820, ISSN: 0026-2692, DOI: DOI:10.1016/J.MEJO.2007.07.070
- FORKE R ET AL: "Fabrication and characterization of a force coupled sensor-actuator system for adjustable resonant low frequency vibration detection", SENSORS AND ACTUATORS A, ELSEVIER SEQUOIA S.A., LAUSANNE, CH, Bd. 145-146, 1. Juli 2008 (2008-07-01), Seiten 245-256, XP022716440, ISSN: 0924-4247, DOI: DOI:10.1016/J.SNA.2007.12.032 [gefunden am 2008-01-12]

## Beschreibung

Die Erfindung betrifft einen mikromechanischen Sensor mit wenigstens zwei Feder-Masse-Dämpfer-Schwingern, die von einer gemeinsamen externen Schwingung anregbar sind, wobei der mikromechanische Sensor ein erstes Feder-Masse-Dämpfer-Schwingungssystem mit einer ersten Resonanzfrequenz und ein zweites gedämpftes Feder-Masse-Schwingungssystem mit einer zweiten Resonanzfrequenz, die niedriger als die erste Resonanzfrequenz ist, aufweist. Die Erfindung betrifft auch ein Verfahren zum Erfassen und/oder Messen von Schwingungen mit einem solchen Sensor sowie ein Verfahren zur Herstellung eines solchen mikromechanischen Sensors.

Sensoren der genannten Gattung werden beispielsweise als Körperschallsensoren zur Verschleiß- und Fehlerüberwachung an Maschinen eingesetzt. Um ein zu detektierendes akustisches Signal gut auswerten zu können, ist es günstig, wenn in dem Sensor aus dem akustischen Eingangssignal eine große Schwingungsamplitude der Schwinger entsteht. Große Schwingungsamplituden werden von resonanten Schwingern mit hohen Gütefaktoren erreicht. Naturgemäß wird jedoch bei einem Schwinger mit hohem Gütefaktor die gewünschte große Schwingungsamplitude nur bei der Resonanzfrequenz erreicht, und die Bandbreite, in der eine resonante hohe Schwingungsamplitude angeregt wird, ist umso kleiner, je größer der Gütefaktor ist.

Um akustische Signale in einem größeren Frequenzbereich detektieren zu können, werden Sensoren mit Arrays von Schwingern aufgebaut, die verschiedene Resonanzfrequenzen in einem zu analysierenden Frequenzbereich aufweisen. Ein solches Sensorarray ist beispielsweise in der Druckschrift JP 2000131134 A beschrieben. Mit Sensorarrays können gleichzeitig große Schwingungsamplituden einzelner Schwinger und damit zusammenhängend gute Sensorsignale erzeugt werden und andererseits kann auch eine große Bandbreite durch die benachbarte Anordnung schmaler Frequenzbereiche realisiert werden. Nachteilig an Sensorarrays ist, dass sie viele Elemente aufweisen, wobei der Sensor aufwändige Strukturen und eine umfangreiche Auswerteelektronik besitzt und die Herstellung des Sensors folglich auch mit hohen Kosten verbunden ist. Ein weiterer Nachteil derartiger Sensoren ist, dass die resonanten Schwinger eine große Einschwingzeit haben und sie deshalb bei einer Folge von Pulsen mit kurzen Zeitabständen eine geringere Empfindlichkeit als bei periodischen Eingangssignalen besitzen. Ein weiteres Problem, welches oft bei Sensoren auftritt, ist das Vorhandensein von mechanischen Störsignalen, deren Amplitude in der Regel mit niedrigen Frequenzen zunimmt. In der zitierten Druckschrift wird versucht, unerwünschte niederfrequente Schwingungen durch Dummy-Resonatoren zu absorbieren.

Die Patentveröffentlichung US 5, 856, 722 offenbart einen mikro mechanischen Sensor mit zwei Feder-Masse-Dämpfer-Schwingen, die von einer gemeinsamen externen Schwingung anregbar sind wobei der mikromechanische Sensor ein erstes Feder-Masse-Dampfer-Schwingungssystem mit einer ersten Resonanzfrequenz sowie ein zweites Feder-Masse-Dampfer-Schwingungssystem mit einer zweiten Resonanzfrequenz, die niedriger als die erste Resonanzfrequenz ist, aufweist.

Es ist die Aufgabe der vorliegenden Erfindung, einen Sensor zur Detektion akustischer Signale oder von Vibrationen aufzuzeigen, der eine geringe Störanfälligkeit gegenüber niederfrequenten Eingangssignalen hat, der ein ausreichend hohes Signal bei einem gegebenen Eingangssignal erzeugt, der für eine Bandbreite verschiedener Signalfrequenzen einsetzbar ist, der auf einer kleinen Sensorfläche mit geringen Kosten gefertigt werden kann und der auch zur Detektion von Ereignissen mit kurzen Zeitabständen geeignet ist. Es ist ferner die Aufgabe der vorliegenden Erfindung, ein Messverfahren zum Betrieb eines solchen Sensors und Herstellungsverfahren zur Fertigung solcher Sensoren vorzuschlagen.

Die Aufgabe wird durch einen mikromechanischen Sensor der oben genannten Gattung gelöst, wobei das erste und das zweite Feder-Masse-Dämpfer-Schwingungssystem so ausgebildet sind, dass sie in einem Frequenzbereich unterhalb der zweiten Resonanzfrequenz im Gleichtakt schwingen; wobei das erste und das zweite Feder-Masse-Dämpfer-Schwingungssystem Elektroden aufweisen, die in einer Messrichtung um Elektrodenruhelagen mit Elektrodenauslenkungen, die gleich oder proportional zu Auslenkungen der Feder-Masse-Dämpfer-Schwinger sind, schwingen; wobei das erste und das zweite Feder-Masse-Dämpfer-Schwingungssystem durch wenigstens ein auf die Elektroden wirkendes elektrostatisches Feld unter Ausbildung wenigstens einer Kapazität miteinander gekoppelt sind, wobei die Kapazität durch wenigstens eine Elektrodenfläche und durch wenigstens einen Elektrodenabstand und/oder eine Elektrodenüberdeckung bestimmt ist, wobei die Elektrodenauslenkungen den Elektrodenabstand und/oder die Elektrodenüberdeckung und dadurch die Größe der Kapazität beeinflussen und wobei bei einer Gleichtaktschwingung die Einflüsse des ersten und zweiten Feder-Masse-Dämpfer-Schwingungssystems auf die Größe der Kapazität kompensiert werden.

Die beiden Feder-Masse-Dämpfer-Schwingungssysteme bestehen im einfachsten Fall aus jeweils einem Schwinger. Ein Schwingungssystem kann jedoch auch aus zwei oder mehreren Schwingern ausgebildet sein. Die Ausbildung eines Schwingungssystems aus mehreren Schwingern kann beispielsweise den Vorteil haben, dass kleinere Schwinger mit größeren Resonanzfrequenzen realisiert werden können.

Zur Funktion des Sensors ist es erforderlich, die Bewegungen der Schwinger zu erfassen. Zu diesem Zweck sind elektrostatische Elektroden vorgesehen, die durch eine Beziehung zur ortsfesten elektrostatischen Elektrode in einer elektronischen Schaltung ein elektrostatisches Feld aufbauen. Die Erfassung eines elektrostatischen Feldes als Spannung ist besonders einfach, kostengünstig und technisch vorteilhaft. Daher wird erfindungsgemäß vorzugsweise der Einsatz von elektrostatischen Elektroden vorgeschlagen. Mit größerem Aufwand sind jedoch auch andere Signalwandler, beispielsweise piezoresistive Signalwandler, zur Erfassung von Schwingungen einsetzbar.

Die Elektroden sind entweder als Bestandteile der Feder-Masse-Dämpfer-Schwinger ausgebildet und führen in diesem Fall die Schwingungen der Schwinger mit aus, oder die Elektroden sind räumlich von den Schwingern getrennt. Wenn die Elektroden räumlich von den Schwingern getrennt sind, sind sie jedoch so mit den Schwingern gekoppelt, dass ihre Schwingungsamplitude mechanisch an die Schwingungsamplitude der Feder-Masse-Schwinger gekoppelt ist. Durch die mechanische Kopplung kann, beispielsweise durch eine Hebelanordnung mit unterschiedlichen Hebellängen, eine Unter- bzw. Übersetzung der Schwingungsamplitude in einem gewünschten Verhältnis erfolgen.

Das erste und das zweite Feder-Masse-Dämpfer-Schwingungssystem werden erfindungsgemäß miteinander gekoppelt und die Kopplung wird dadurch realisiert, dass die Elektroden beider Schwingungssysteme und die entsprechenden Gegenelektroden jeweils elektrisch miteinander verbunden sind. Neben der elektrostatischen Kopplung über Kapazitäten sind prinzipiell auch andere Kopplungen, beispielsweise mechanische, möglich. Elektrostatische Kopplungen sind aber besonders einfach und flexibel realisierbar, daher werden sie bevorzugt eingesetzt. Den schwingenden Elektroden sind ortsfeste Elektroden zugeordnet. Die räumliche Anordnung der bewegten und ortsfesten Elektroden zueinander dient der Ausbildung von Kapazitäten und der Festlegung der Messrichtung. Bei einer parallelen Anordnung flächiger Elektroden entstehen beispielsweise Plattenkondensatoren. Die Kapazität so gebildeter Kondensatoren wird durch die Schwingung der Schwinger und eine dadurch eintretende Variation des Elektrodenabstandes oder eine Variation der Elektrodenüberdeckung oder eine Kombination daraus variiert. Die Kapazität des Sensors ist die Summe der Teilkapazitäten von erstem und zweitem Feder-Masse-Dämpfer-Schwingungssystem. Die Größe der Änderung der Teilkapazität in Abhängigkeit von der mechanischen Anregung wird auch als kapazitive Sensitivität des Feder-Masse-Dämpfer-Schwingungssystem bezeichnet.

Die mechanische Reaktion von Schwingern auf einer Anregungsfrequenz wird hingegen als Sensitivität der Schwinger bezeichnet. Sie hängt insbesondere von der Resonanzfrequenz der Schwinger ab. In der Nähe der Resonanzfrequenzen von zwei unterschiedlichen Schwingern sind die mechanischen Sensitivitäten und Phasenlagen stark von der konkreten Anregungsfrequenz abhängig. Bei einer Anregungsfrequenz zwischen den beiden Resonanzfrequenzen schwingen beide Schwinger mechanisch bis hin zum Gegentakt und kapazitiv bis hin zum Gleichtakt. Bei einer Anregungsfrequenz, die weit von den Resonanzfrequenzen entfernt ist, verursacht die Anregungsfrequenz hingegen eine mechanische Gleichtaktschwingung der beiden Schwinger. Die Erfindung nutzt diese Gleichtaktschwingung aus, um einen mechanischen Bandpassfilter auszubilden, der bei der mechanischen Gleichtaktschwingung eine kapazitive Gegentaktschwingung ausführt und durch Differenzbildung der Kapazitätsanteile beider Feder-Masse-Dämpfer-Schwingungssysteme eine kleine und im Bereich der Resonanzfrequenzen eine große Kapazitätsänderung ausgibt.

Die Zusammenschaltung von zwei Schwingungssystemen zu einem Bandpassfilter setzt jedoch voraus, dass beide Schwingungssysteme den Bandpassfilter zu gleichen Anteilen mitbestimmen. Ähnliche Schwinger weisen jedoch bei Frequenzen weit unterhalb der Resonanzfrequenz unterschiedliche mechanische Sensitivitäten auf; der Schwinger mit niederfrequenter Resonanzfrequenz hat hier eine größere mechanische Sensitivität als der Schwinger mit der höheren Resonanzfrequenz. In dem erfindungsgemäßen Sensor ist der Einfluss beider Schwingungssysteme auf die gemeinsame Kapazität durch eine konstruktive Maßnahme kompensiert. Beide Schwingungssysteme führen dafür in dem erfindungsgemäßen Sensor bei niedrigen Frequenzen bei der mechanischen Gleichtaktschwingung eine kapazitive Gegentaktschwingung aus. Dabei wird die Kapazität von beiden Schwingungssystemen betragsmäßig in gleichem Umfang jedoch mit invertierten Vorzeichen moduliert. Das heißt, bei einer Gleichtaktschwingung wird die Kapazität in der Summe kaum verändert und die Kapazität ist im Wesentlichen konstant.

Bei Frequenzen weit über den Resonanzfrequenzen der beiden Schwingungssysteme erfolgt ein schnelles Abklingen der Sensitivitäten, daher ist das Verhalten bei hohen Frequenzen in der Regel weniger bedeutsam. Niedrige und hohe Frequenzen werden in dem erfindungsgemäßen Sensor durch die Gleichtaktschwingung und das natürliche Sensitivitätsverhalten ausgeblendet.

In dem Frequenzbereich, in dem die Resonanzfrequenzen der beiden Schwingungssysteme liegen, weist der Sensor jedoch eine hohe Sensitivität mit Bandpasscharakteristik auf. Die Bandpasscharakteristik des Sensors wird durch die Sensitivität des ersten Feder-Masse-Dämpfer-Schwingungssystems, durch die Sensitivität des zweiten Feder-Masse-Dämpfer-Schwingungssystems und durch die Differenz der Sensitivitäten beider Feder-Masse-Dämpfer-Schwingungssysteme bestimmt. Der erfindungsgemäße Sensor hat vorteilhafte Eigenschaften. Die Auswerteelektronik des Sensors kann auf die Nutzsignale hin optimiert werden, da die in der Praxis insbesondere störenden niederfrequenten Anregungsfrequenzen bereits im Sensor gefiltert werden. In der Konsequenz ist der erfindungsgemäße Sensor störunempfindlich, und er weist hohe Empfindlichkeiten in einem breiten Arbeitsfrequenzbereich auf. Die hohe Frequenzselektivität wird schon bei kleinen Gütefaktoren - bedingt durch die geringe Einschwingzeit - erreicht.

In einer einfachen ersten Ausbildung zeichnet sich der erfindungsgemäße Sensor dadurch aus, dass der mikromechanische Sensor eine ortsfeste Kammelektrode mit ortsfesten Kammstrukturen aufweist, dass das erste und das zweite Feder-Masse-Dämpfer-Schwingungssystem bewegte Kammstrukturen aufweisen, die in die ortsfesten Kammstrukturen eingreifen, wobei die bewegten Kammstrukturen des ersten Feder-Masse-Dämpfer-Schwingungssystems auf einer zweiten Seite der ortsfesten Kammstrukturen angeordnet sind und die bewegten Kammstrukturen des zweiten Feder-Masse-Dämpfer-Schwingungssystems auf einer ersten Seite der ortsfesten Kammstrukturen angeordnet sind und wobei alle bewegten Kammstrukturen elektrisch leitend miteinander verbunden sind.

In dieser Ausbildung werden als Elektroden Kammelektroden verwendet. Kammelektroden weisen durch eine Vielzahl von Kammstrukturen eine große Oberfläche pro verfügbarem Raum auf. Mit mikromechanischen Herstellungstechnologien sind Kammstrukturen auch problemlos realisierbar, sodass Kammelektroden in mikromechanischen Bauelementen weit verbreitet sind. Der vorgeschlagene Sensor weist eine ortsfeste Kammelektrode auf, in die sowohl die bewegten Kammstrukturen des ersten Feder-Masse-Dämpfer-Schwingungssystems als auch die Kammstrukturen des zweiten Feder-Masse-Dämpfer-Schwingungssystems eingreifen. Dabei sind die Kammstrukturen des ersten Feder-Masse-Dämpfer-Schwingungssystems auf einer zweiten Seite der ortsfesten Kammstrukturen angeordnet, und die bewegten Kammstrukturen des zweiten Feder-Masse-Dämpfer-Schwingungssystems sind auf der ersten Seite der ortsfesten Kammstrukturen angeordnet. Durch diese umgekehrte Anordnung wird erreicht, dass bei einer Gleichtaktschwingung von erstem und zweitem Feder-Masse-Dämpfer-Schwingungssystem bei einer Vergrößerung des Elektrodenabstandes zwischen den Kammstrukturen des ersten Feder-Masse-Dämpfer-Schwingungssystems zu den ortsfesten Kammstrukturen eine Verkleinerung des Abstandes der Kammstrukturen des zweiten Feder-Masse-Dämpfer-Schwingungssystems zu den ortsfesten Kammstrukturen erfolgt. Durch diese Anordnung wird eine mechanische Gleichtaktschwingung in eine kapazitive Gegentaktschwingung überführt.

Die ortsfeste Kammelektrode erstreckt sich über beide verwendete Schwingungssysteme. Zusätzlich werden die Kammstrukturen der beiden Schwingungssysteme elektrisch leitend miteinander verbunden. Dadurch entsteht eine Kapazität, die aus der Anordnung der bewegten Kammstrukturen des ersten und des zweiten Feder-Masse-Dämpfer-Schwingungssystems und der ortsfesten Kammelektrode zueinander bestimmt ist. In diesem Ausführungsbeispiel der Erfindung erfolgt die im Anspruch 1 genannte Kompensation der Einflüsse von erstem und zweitem Feder-Masse-Dämpfer-Schwingungssystem auf die Größe der Kapazität, also die Kompensation der kapazitiven Sensitivitäten durch die Anzahl der Kammstrukturen. Beispielsweise kann das erste Feder-Masse-Dämpfer-Schwingungssystem mit einer größeren Anzahl von Kammstrukturen als das zweite Feder-Masse-Dämpfer-Schwingungssystem ausgebildet sein.

In einem zweiten erweiterten Ausbildungsbeispiel der Erfindung, ist der mikromechanische Sensor so aufgebaut, dass der mikromechanische Sensor die ortsfeste Kammelektrode mit ortsfesten Kammstrukturen und eine weitere ortsfeste Kammelektrode mit weiteren ortsfesten Kammstrukturen aufweist, dass die bewegten Kammstrukturen des ersten und des zweiten Feder-Masse-Dämpfer-Schwingungssystems zwischen die ortsfesten Kammstrukturen und die weiteren ortsfesten Kammstrukturen eingreifen, wobei die bewegten Kammstrukturen des ersten Feder-Masse-Dämpfer-Schwingungssystems auf einer zweiten Seite der ortsfesten Kammstrukturen und auf einer ersten Seite der weiteren ortsfesten Kammstrukturen angeordnet sind und die bewegten Kammstrukturen des zweiten Feder-Masse-Dämpfer-Schwingungssystems auf der ersten Seite der ortsfesten Kammstrukturen und auf der zweiten Seite der weiteren ortsfesten Kammstrukturen angeordnet sind und wobei alle bewegten Kammstrukturen elektrisch leitend miteinander verbunden sind.

In dieser Ausbildung bilden die Schwinger nicht nur eine Kapazität mit der ortsfesten Kammelektrode aus, stattdessen bilden sie zusätzlich eine weitere Kapazität mit der weiteren ortsfesten Kammelektrode aus. Die bewegten Kammstrukturen der Schwinger bewegen sich zwischen den ortsfesten Kammstrukturen und den weiteren ortsfesten Kammstrukturen. Die Kapazität eines Plattenkondensators ist umgekehrt proportional zum Elektrodenabstand, das heißt im konkreten Fall, umgekehrt proportional zum Abstand der ortsfesten und bewegten Kammstrukturen. Bei einem geringen Abstand der Platten im Plattenkondensator weist der Plattenkondensator eine hohe Kapazität auf. Durch die Verwendung von zwei Elektroden, der ortsfesten Kammelektrode und der weiteren ortsfesten Kammelektrode, hat der Schwinger entweder zu der ortsfesten oder zu der weiteren ortsfesten Kammelektrode einen geringen Abstand und eine große Kapazität.

Die Verwendung einer weiteren ortsfesten Kammelektrode in einem mikromechanischen Sensor hat einerseits durch die Ausbildung eines Differenzialkondensators eine Vereinfachung und Verbesserung der Signalauswertung des Sensors zur Folge, andererseits erfordert die Ausbildung der weiteren ortsfesten Kammelektrode einen erhöhten Fertigungsaufwand, da sowohl die ortsfeste Kammelektrode als auch die weitere ortsfeste Kammelektrode isoliert von der jeweils anderen ortsfesten Kammelektrode ausgebildet werden muss. Die aufwändigere Herstellung kann beispielsweise darin bestehen, dass für die weitere ortsfeste Kammelektrode eine zusätzliche Verdrahtungsebene vorgesehen ist, die außerhalb der Ebene liegt, in der die Schwinger und die ortsfeste Kammelektrode ausgebildet sind.

In einer weiteren, der bevorzugten Ausbildung des erfindungsgemäßen mikromechanischen Sensors ist dieser so aufgebaut, dass der mikromechanische Sensor eine erste ortsfeste Kammelektrode mit ersten ortsfesten Kammstrukturen und eine zweite ortsfeste Kammelektrode mit zweiten ortsfesten Kammstrukturen, zwischen welchen das erste und das zweite Feder-Masse-Dämpfer-Schwingungssystem angeordnet sind, aufweist, wobei erste bewegte Kammstrukturen des ersten Feder-Masse-Dämpfer-Schwingungssystems auf einer zweiten Seite der ersten ortsfesten Kammstrukturen angeordnet sind, zweite bewegte Kammstrukturen des ersten Feder-Masse-Dämpfer-Schwingungssystems auf einer ersten Seite der zweiten ortsfesten Kammstrukturen angeordnet sind, erste bewegte Kammstrukturen des zweiten Feder-Masse-Dämpfer-Schwingungssystems auf der ersten Seite der ersten ortsfesten Kammstrukturen angeordnet sind und zweite bewegte Kammstrukturen des zweiten Feder-Masse-Dämpfer-Schwingungssystems auf der zweiten Seite der zweiten ortsfesten Kammstrukturen angeordnet sind.

In dieser Ausbildung weisen die Schwinger neben den bewegten Kammstrukturen noch zweite bewegte Kammstrukturen auf, wobei die ersten bewegten Kammstrukturen an der Ausbildung einer ersten Kapazität und die zweiten bewegten Kammstrukturen an der Ausbildung einer zweiten Kapazität beteiligt sind. Wie bereits im letzten Ausführungsbeispiel sind auch in diesem Ausführungsbeispiel die Kapazitäten als Differenzialkondensatoranordnung ausgebildet. Das heißt, mit einer Vergrößerung der ersten Kapazitäten erfolgt eine Verkleinerung der zweiten Kapazitäten und umgekehrt. In diesem Ausführungsbeispiel werden die zweiten Kondensatoren unter Einsatz zweiter bewegter Kammstrukturen realisiert. Durch die zusätzlichen zweiten bewegten Kammstrukturen können sowohl die ortsfesten Kammstrukturen als auch die zweiten ortsfesten Kammstrukturen in der Schwingerebene realisiert werden. Durch die Herstellung in einer Ebene kann ein einfacheres Fertigungsverfahren als im zweiten Ausführungsbeispiel verwendet werden, und die Herstellungskosten für einen solchen Sensor können niedrig gehalten werden. Ein Sensor mit zweiten bewegten Kammstrukturen muss aber nicht zwingend in einer Ebene realisiert werden. Es können auch Erweiterungen, beispielsweise eine Kombination der oben beschriebenen Ausführungsbeispiele, durch weitere Elektroden und weitere Verdrahtungsebenen vorgesehen sein.

In einer bevorzugten Ausbildung des erfindungsgemäßen mikromechanischen Sensors weist das erste Feder-Masse-Dämpfer-Schwingungssystem eine größere Anzahl von ortsfesten und bewegten Kammstrukturen als das zweite Feder-Masse-Dämpfer-Schwingungssystem auf. Der Einfluss des ersten und des zweiten Feder-Masse-Dämpfer-Schwingungssystems auf die Kapazität soll gleich groß sein. Das erste Feder-Masse-Dämpfer-Schwingungssystem hat eine höhere Resonanzfrequenz als das zweite Feder-Masse-Dämpfer-Schwingungssystem. Das erste Feder-Masse-Dämpfer-Schwingungssystem hat folglich bei Anregungsfrequenzen weit unterhalb der Resonanzfrequenz eine geringere Bewegungsamplitude als das zweite Feder-Masse-Dämpfer-Schwingungssystem. Bei gleichartig ausgebildeten Kammstrukturen wäre der Einfluss des ersten Feder-Masse-Dämpfer-Schwingungssystems auf die Kapazität durch die schwächere Bewegung kleiner als der Einfluss des zweiten Feder-Masse-Dämpfer-Schwingungssystems. Der naturgemäß kleinere Einfluss des ersten Feder-Masse-Dämpfer-Schwingungssystems wird in dem hier vorgeschlagenen Sensor durch eine größere Anzahl von Kammstrukturen kompensiert.

In einer Weiterbildung des erfindungsgemäßen mikromechanischen Sensors weist das erste Feder-Masse-Dämpfer-Schwingungssystem wenigstens zwei Feder-Masse-Dämpfer-Schwinger auf. Wie bereits oben beschrieben wurde, ist am Schwinger des ersten Feder-Masse-Dämpfer-Schwingungssystems eine höhere Anzahl von Kammstrukturen als am Schwinger des zweiten Feder-Masse-Dämpfer-Schwingungssystems wünschenswert; andererseits ist der Schwinger des ersten Feder-Masse-Dämpfer-Schwingungssystems, der höheren Resonanzfrequenz geschuldet, in der Regel kleiner (geringere Masse bei gleicher Federsteifigkeit) als der Schwinger des zweiten Feder-Masse-Dämpfer-Schwingungssystems. In der Konsequenz kann ein erster Feder-Masse-Dämpfer-Schwinger zu klein sein, um die gewünschte Anzahl bewegter Kammstrukturen zu realisieren. In diesem Fall können auch zwei oder mehrere erste Feder-Masse-Dämpfer-Schwinger realisiert werden, wobei dann in der Summe genügend bewegte Kammstrukturen in dem ersten Feder-Masse-Dämpfer-Schwingungssystem realisiert werden können.

In einer weiteren Alternative des erfindungsgemäßen mikromechanischen Sensors ist dieser so aufgebaut, dass bei dem mikromechanischen Sensor eines der Feder-Masse-Dämpfer-Schwingungssysteme ein mechanisches Koppelelement und eine elektrostatische Koppelelektrode aufweist, wobei das mechanische Koppelelement für eine Unter- oder Übersetzung der Schwingungsamplitude eines Feder-Masse-Dämpfer-Schwingers dieses Feder-Masse-Dämpfer-Schwingungssystems auf eine kleinere oder größere Schwingungsamplitude der elektrostatischen Koppelelektrode ausgebildet ist und wobei die Schwingungsamplitude des anderen Feder-Masse-Dämpfer-Schwingungssystems und der elektrostatischen Koppelelektrode bei einer Gleichtaktschwingung gleich groß sind.

In diesem Sensor werden die unterschiedlichen Schwingungsamplituden der Schwinger der beiden Feder-Masse-Dämpfer-Schwingungssysteme nicht elektrisch durch unterschiedliche Elektroden aneinander angeglichen, sondern mechanisch über einen Hebelmechanismus. Beispielsweise wird die größere Schwingungsamplitude des zweiten Feder-Masse-Dämpfer-Schwingungssystems mittels eines Hebels soweit untersetzt, dass die Schwingungsamplitude der Koppelelektrode, die mit dem zweiten Feder-Masse-Dämpfer-Schwinger über einen Hebel verbunden ist, soweit reduziert wird, dass die Koppelelektrode des zweiten Feder-Masse-Dämpfer-Schwingungssystems die gleichen Amplituden hat wie der Schwinger des ersten Feder-Masse-Dämpfer-Schwingungssystems. Statt einer Untersetzung der Schwingungsamplitude des zweiten Feder-Masse-Dämpfer-Schwingungssystems kann auch eine Übersetzung der Schwingungsamplitude des ersten Feder-Masse-Dämpfer-Schwingungssystems vorgesehen sein. Auf den mechanischen Hebel wirken durch die Kopplung von erstem und zweitem Feder-Masse-Dämpfer-Schwingungssystem Kräfte von beiden Schwingungssystemen ein. An dem Hebel könnte daher ein Sensorsignal auf eine andere als die hier vorgestellte elektrostatische Weise gewonnen werden. Beispielsweise könnte hier ein piezoresistiver oder ein optischer Signalwandler eingesetzt werden. Auch ein Sensor mit mechanischem Koppelelement kann zu einer Differenzialkondensatoranordnung weitergebildet werden.

In einem anderen vorteilhaften Ausführungsbeispiel der vorliegenden Erfindung ist der mikromechanische Sensor so realisiert, dass bei dem mikromechanischen Sensor wenigstens ein Feder-Masse-Dämpfer-Schwinger des ersten Feder-Masse-Dämpfer-Schwingungssystems in einer Messrichtung innerhalb einer Schwingungsebene schwingt und das zweite Feder-Masse-Dämpfer-Schwingungssystem wenigstens einen in der Schwingungsebene in einem Drehwinkel zur Messrichtung gedrehten Feder-Masse-Dämpfer-Schwinger aufweist, wobei der gedrehte Feder-Masse-Dämpfer-Schwinger zu den Kammstrukturen des ersten Feder-Masse-Dämpfer-Schwingers parallele Kammstrukturen und eine Führung aufweist, die ihm eine Schwingung in einer durch den Drehwinkel bestimmten Schrägrichtung gestattet, wobei bei einer Gleichtaktschwingung die Schwingungsamplitude des gedrehten Feder-Masse-Dämpfer-Schwingers eine Vektorkomponente in Messrichtung aufweist, die gleich groß wie die Schwingungsamplitude des Feder-Masse-Dämpfer-Schwingers des ersten Feder-Masse-Dämpfer-Schwingungssystems ist.

In dieser Ausbildung erfolgt eine Reduzierung der größeren mechanischen Sensitivität des zweiten Feder-Masse-Dämpfer-Schwingungssystems dadurch, dass durch die gedrehte Anordnung der Kammstrukturen nur ein Teil der Bewegung der Schwinger auf die Bewegung der Kammstrukturen in Messrichtung übertragen wird und der zweite vektorielle Anteil der Schwingerbewegung, der orthogonal zur Messrichtung liegt, keinen oder einen geringeren Einfluss auf das Messergebnis hat. Ein solcher Sensor zeichnet sich durch einen einfachen und platzsparenden mechanischen Aufbau aus. Dieser Sensor kann in einer modifizierten Ausführung zu einer Differenzialkondensatoranordnung weitergebildet werden.

Die Aufgabe der Erfindung wird auch durch ein Verfahren zum Erfassen und/oder Messen von Schwingungen mit einem erfindungsgemäßen Sensor gelöst, das sich dadurch auszeichnet, dass das erste und das zweite Feder-Masse-Dämpfer-Schwingungssystem in einem Frequenzbereich unterhalb der zweiten Resonanzfrequenz im Gleichtakt schwingen; dass das erste und das zweite Feder-Masse-Dämpfer-Schwingungssystem Elektroden aufweisen, die in einer Messrichtung um Elektrodenruhelagen mit Elektrodenauslenkungen, die gleich oder proportional zu Auslenkungen der Feder-Masse-Dämpfer-Schwinger sind, schwingen; dass das erste und das zweite Feder-Masse-Dämpfer-Schwingungssystem durch wenigstens ein auf die Elektroden wirkendes elektrostatisches Feld unter Ausbildung einer Kapazität miteinander gekoppelt werden, wobei die Kapazität durch wenigstens eine Elektrodenfläche, durch wenigstens eine Elektrodenüberdeckung und durch wenigstens einen Elektrodenabstand bestimmt wird, wobei die Elektrodenauslenkungen den Elektrodenabstand und/oder die Elektrodenüberdeckung und dadurch die Größe der Kapazität beeinflussen und wobei bei einer Gleichtaktschwingung das zweite Feder-Masse-Dämpfer-Schwingungssystem den Einfluss des ersten Feder-Masse-Dämpfer-Schwingungssystems auf die Größe der Kapazität kompensiert und wobei die Größe der Kapazität als Sensorausgangsgröße verwendet wird.

In dem Verfahren werden also zwei Feder-Masse-Dämpfer-Schwingungssysteme eingesetzt, die unterschiedliche Resonanzfrequenzen aufweisen. Diese beiden Schwingungssysteme werden so angeordnet, dass sie bei externen Anregungen unterhalb der Resonanzfrequenzen der Schwingungssysteme im Gleichtakt schwingen. In den Schwingungssystemen sind entweder direkt an den Schwingern Elektroden vorgesehen, wobei dann die Elektroden mit den gleichen Auslenkungen schwingen wie die Schwinger selbst oder die Elektroden sind nicht direkt an den Schwingern vorgesehen, sondern werden beispielsweise durch Hebel mit einer zu den Schwingern proportionalen Amplitude bewegt. Die beiden Schwingungssysteme werden elektrostatisch miteinander gekoppelt, das heißt, die Elektroden der Schwingungssysteme sind an der Ausbildung einer gemeinsamen Kapazität beteiligt. Die Größe der Kapazität wird durch die Schwingungen der Schwinger beeinflusst. Dabei können die Schwingungsamplituden beispielsweise zur Änderung der Elektrodenabstände oder zur Änderung der Elektrodenüberdeckungen eingesetzt werden.

In dem erfindungsgemäßen Verfahren ist der Einfluss der Feder-Masse-Dämpfer-Schwingungssysteme auf die Kapazität so ausgelegt, dass beide Feder-Masse-Dämpfer-Schwingungssysteme einen inversen Einfluss auf die Kapazität besitzen und dass der Einfluss der beiden Schwingungssysteme auf die Kapazität bei einer Gleichtaktschwingung kompensiert wird. Das heißt, die kleiner werdende Kapazität durch die Bewegung in dem einen Schwingungssystem wird durch die gleichgerichtete Bewegung in dem anderen Schwingungssystem und die damit verbundene Kapazitätszunahme kompensiert. Die Größe der Kapazität wird dabei als Sensorausgangsgröße verwendet. Diese Ausgangsgröße wird dann dadurch nutzbar gemacht, dass sie in eine entsprechende elektronische Schaltung eingebunden wird. Durch dieses Mess- und Erfassungsverfahren von Schwingungen wird ein Bandpassverhalten erreicht. Anregungsfrequenzen unterhalb und oberhalb des nutzbaren Frequenzbandes werden wirkungsvoll bereits durch das mechanische Verhalten der Schwinger unterdrückt. Starke Modulationen der Kapazität entstehen hingegen nur in dem nutzbaren Frequenzband. Das nutzbare Frequenzband liegt zwischen den beiden Resonanzfrequenzen der Schwingungssysteme. Durch das Bandpassverhalten kann mit dem erfindungsgemäßen Verfahren ein größerer Frequenzbereich erfasst werden als mit einem resonanten Schwingungssystem. Das in einem breiten Frequenzband schon bei geringen Gütefaktoren arbeitende Messverfahren zeichnet sich durch ein sehr schnelles Einschwing- und Ansprechverhalten aus.

In einer einfachen Variante des erfindungsgemäßen Verfahrens wird dieses so durchgeführt, dass der mikromechanische Sensor eine ortsfeste Kammelektrode mit ortsfesten Kammstrukturen aufweist, dass das erste und das zweite Feder-Masse-Dämpfer-Schwingungssystem bewegte Kammstrukturen aufweisen, die in die ortsfesten Kammstrukturen eingreifen, wobei durch die Anordnung der ortsfesten und der bewegten Kammstrukturen zueinander bei einer Gleichtaktschwingung gleichzeitig mit einer Vergrößerung des Elektrodenabstands und/oder einer Verkleinerung der Elektrodenüberdeckung der bewegten Kammstrukturen des ersten Feder-Masse-Dämpfer-Schwingungssystems von bzw. mit den ortsfesten Kammstrukturen eine Verkleinerung des Elektrodenabstands und/oder eine Vergrößerung der Elektrodenüberdeckung der bewegten Kammstrukturen des zweiten Feder-Masse-Dämpfer-Schwingungssystems von bzw. mit den ortsfesten Kammstrukturen vorgenommen wird, und wobei die bewegten Kammstrukturen elektrisch leitend miteinander verbunden werden.

In dieser Variante des erfindungsgemäßen Verfahrens wird eine ortsfeste Kammelektrode, die zum Eingriff in die bewegten Kammelektroden von dem ersten und dem zweiten Feder-Masse-Dämpfer-Schwingungssystem vorgesehen ist, eingesetzt. Die Kammstrukturen der bewegten Schwinger und der ortsfesten Kammelektrode sind dabei so angeordnet, dass bei einer Gleichtaktschwingung gleichzeitig mit der Vergrößerung des Elektrodenabstandes der bewegten Kammstrukturen des einen Schwingers von den ortsfesten Kammstrukturen eine Verkleinerung des Elektrodenabstandes der bewegten Kammstrukturen des Schwingers des anderen Feder-Masse-Dämpfer-Schwingungssystems von den ortsfesten Kammstrukturen vorgenommen wird. Statt der Vergrößerung und Verkleinerung der Abstände der Kammstrukturen kann auch eine Verkleinerung und Vergrößerung der Elektrodenüberdeckung vorgesehen sein. Es kann auch eine gleichzeitige Variation von Elektrodenabstand und Elektrodenüberdeckung vorgesehen sein. In jedem Fall geschieht aber mit einer Gleichtaktschwingung von erstem und zweitem Feder-Masse-Dämpfer-Schwingungssystem mit der Vergrößerung der Kapazität durch das eine Feder-Masse-Dämpfer-Schwingungssystem eine Verkleinerung der Kapazität durch das andere Feder-Masse-Dämpfer-Schwingungssystem. Dadurch, dass die bewegten Kammstrukturen elektrisch leitend miteinander verbunden werden und mit den ortsfesten Kammstrukturen eine gemeinsame Kapazität bilden, und durch die konstruktive Ausbildung der beiden Feder-Masse-Dämpfer-Schwingungssysteme wird die Vergrößerung der Kapazität durch das eine Feder-Masse-Dämpfer-Schwingungssystem durch die Verkleinerung der Kapazität durch das andere Feder-Masse-Dämpfer-Schwingungssystem in der Summe kompensiert.

In einer vorteilhaften Weiterbildung des erfindungsgemäßen Verfahrens zum Erfassen und/oder Messen von Schwingungen, ist dieses derart gestaltet, dass der mikromechanische Sensor die ortsfeste Kammelektrode mit ortsfesten Kammstrukturen und eine weitere ortsfeste elektrostatische Kammelektrode mit weiteren ortsfesten Kammstrukturen aufweist, dass die bewegten Kammstrukturen des ersten und des zweiten Feder-Masse-Dämpfer-Schwingungssystems zwischen die ortsfesten Kammstrukturen und die weiteren ortsfesten Kammstrukturen eingreifen, wobei durch die Anordnung der ortsfesten und der bewegten Kammstrukturen zueinander und durch die zentrale Anordnung der bewegten Kammstrukturen zwischen den ortsfesten Kammstrukturen und den weiteren ortsfesten Kammstrukturen bei einer Gleichtaktschwingung gleichzeitig mit einer Vergrößerung des Elektrodenabstands und/oder einer Verkleinerung der Elektrodenüberdeckung der bewegten Kammstrukturen des ersten Feder-Masse-Dämpfer-Schwingungssystems von bzw. mit den ortsfesten Kammstrukturen und mit einer Verkleinerung des Elektrodenabstands und/oder einer Vergrößerung der Elektrodenüberdeckung der bewegten Kammstrukturen des ersten Feder-Masse-Dämpfer-Schwingungssystems von bzw. mit den weiteren ortsfesten Kammstrukturen eine Verkleinerung des Elektrodenabstands und/oder eine Vergrößerung der Elektrodenüberdeckung der bewegten Kammstrukturen des zweiten Feder-Masse-Dämpfer-Schwingungssystems von bzw. mit den ortsfesten Kammstrukturen und eine Vergrößerung des Elektrodenabstands und/oder eine Verkleinerung der Elektrodenüberdeckung der bewegten Kammstrukturen des zweiten Feder-Masse-Dämpfer-Schwingungssystems von bzw. mit den weiteren ortsfesten Kammstrukturen vorgenommen wird, und wobei die bewegten Kammstrukturen elektrisch leitend miteinander verbunden werden.

In diesem Verfahren sind zusätzlich zu den ortsfesten Kammstrukturen weitere ortsfeste Kammstrukturen vorgesehen. Die bewegten Kammstrukturen schwingen zwischen den ortsfesten Kammstrukturen und den weiteren ortsfesten Kammstrukturen. Dabei werden zwei Kapazitäten ausgebildet: die Kapazität zwischen den bewegten Kammstrukturen und den ortsfesten Kammstrukturen und die weitere Kapazität zwischen den bewegten Kammstrukturen und den weiteren ortsfesten Kammstrukturen. Je nach aktueller Lage der bewegten Kammstrukturen, besteht beispielsweise ein kleiner Abstand zu den Kammstrukturen und damit eine große Kapazität oder ein kleiner Abstand zu den weiteren Kammstrukturen und damit eine große weitere Kapazität. In der Konsequenz steht jederzeit eine vorteilhaft große Kapazität zur Verfügung. Die Kammstrukturen sind dabei so angeordnet, dass bei einer Gleichtaktschwingung von erstem und zweitem Feder-Masse-Dämpfer-Schwingungssystem der Einfluss des zweiten Feder-Masse-Dämpfer-Schwingungssystems invers zu dem Einfluss des ersten Feder-Masse-Dämpfer-Schwingungssystems auf die Kapazität bzw. auf die weitere Kapazität ist. Das vorgeschlagene erweiterte Verfahren zeichnet sich einerseits durch eine verbesserte Funktion aus, andererseits erfordert dieses erweiterte Verfahren auch einen erhöhten Fertigungsaufwand für die Sensoren. Der erhöhte Fertigungsaufwand ergibt sich aus der Notwendigkeit, die weiteren ortsfesten Kammstrukturen isoliert von den ortsfesten Kammstrukturen miteinander zu verbinden. Diese Verbindung der weiteren ortsfesten Kammstrukturen miteinander geschieht beispielsweise durch eine aufwendige und teure weitere Verbindungsebene in dem Sensor.

In einer alternativen Weiterbildung des erfindungsgemäßen Verfahrens wird dieses so ausgestaltet, dass der mikromechanische Sensor eine erste ortsfeste Kammelektrode mit ersten ortsfesten Kammstrukturen und eine zweite ortsfeste Kammelektrode mit zweiten ortsfesten Kammstrukturen aufweist, dass das erste und das zweite Feder-Masse-Dämpfer-Schwingungssystem erste und zweite bewegte Kammstrukturen aufweisen, wobei die ersten bewegten Kammstrukturen in die ersten ortsfesten Kammstrukturen und die zweiten bewegten Kammstrukturen in die zweiten ortsfesten Kammstrukturen eingreifen, wobei durch die Anordnung der ersten und zweiten bewegten Kammstrukturen und der ersten und zweiten ortsfesten Kammstrukturen zueinander bei einer Gleichtaktschwingung gleichzeitig mit einer Vergrößerung des Elektrodenabstands und/oder einer Verkleinerung der Elektrodenüberdeckung der ersten bewegten Kammstrukturen des ersten Feder-Masse-Dämpfer-Schwingungssystems von bzw. mit den ersten ortsfesten Kammstrukturen eine Verkleinerung des Elektrodenabstands und/oder eine Vergrößerung der Elektrodenüberdeckung der ersten bewegten Kammstrukturen des zweiten Feder-Masse-Dämpfer-Schwingungssystems von bzw. mit den ersten ortsfesten Kammstrukturen eine Verkleinerung des Elektrodenabstands und/oder eine Vergrößerung der Elektrodenüberdeckung der zweiten bewegten Kammstrukturen des ersten Feder-Masse-Dämpfer-Schwingungssystems von bzw. mit den zweiten ortsfesten Kammstrukturen und eine Vergrößerung des Elektrodenabstands und/oder eine Verkleinerung der Elektrodenüberdeckung der zweiten bewegten Kammstrukturen des zweiten Feder-Masse-Dämpfer-Schwingungssystems von den zweiten ortsfesten Kammstrukturen realisiert wird, wobei alle bewegten Kammstrukturen elektrisch leitend miteinander verbunden werden.

In dieser Ausgestaltung des Verfahrens kommen neben den ersten bewegten Kammstrukturen zweite bewegte Kammstrukturen zum Einsatz. Den zweiten bewegten Kammstrukturen sind zweite ortsfeste Kammstrukturen zugeordnet. Die zweiten ortsfesten Kammstrukturen erfüllen die gleiche Funktion wie im letzten oben beschriebenen Beispiel die weiteren ortsfesten Kammstrukturen: Sie sind Differenzialelektroden zu den ersten ortsfesten Kammstrukturen. Das heißt, bei einer Entfernung der bewegten Kammstrukturen von den ortsfesten Kammstrukturen erfolgt eine Annäherung zu den zweiten ortsfesten Kammstrukturen und umgekehrt. In der hier vorgeschlagen Ausbildung sind die ersten Elektroden und die zweiten Elektroden räumlich voneinander getrennt. Dadurch ist eine Realisierung beider Elektroden kostengünstig in einer Ebene möglich.

Alternativ zu dem bisher Vorgeschlagenen kann in einem weiteren Beispiel des erfindungsgemäßen Verfahrens auch so verfahren werden, dass wenigstens eines der Feder-Masse-Dämpfer-Schwingungssysteme des mikromechanischen Sensors ein mechanisches Koppelelement und eine elektrostatische Koppelelektrode aufweist, wobei das mechanische Koppelelement die Schwingungsamplitude des Feder-Masse-Dämpfer-Schwingers dieses Feder-Masse-Dämpfer-Schwingungssystems des mikromechanischen Sensors auf eine kleinere oder größere Schwingungsamplitude der elektrostatischen Koppelelektrode unter- oder übersetzt, wobei die Elektrode des anderen Feder-Masse-Dämpfer-Schwingungssystems und die elektrostatische Koppelelektrode bei einer Gleichtaktschwingung des ersten und zweiten Feder-Masse-Dämpfer-Schwingungssystems mit konstantem Elektrodenabstand und konstanter Elektrodenüberdeckung zueinander schwingen.

Bei dieser Variante wird beispielsweise die größere Schwingungsamplitude im zweiten Feder-Masse-Dämpfer-Schwingungssystem und der daraus folgende größere Einfluss auf die Kapazität dadurch kompensiert, dass die Schwingungsamplitude mit Hilfe eines mechanischen Koppelelements auf eine kleinere Schwingungsamplitude einer Koppelelektrode untersetzt wird. Alternativ könnte auch die kleinere Schwingungsamplitude im ersten Feder-Masse-Dämpfer-Schwingungssystem auf eine größere Amplitude einer Koppelelektrode übersetzt werden. Bei diesem Verfahren besteht die Möglichkeit einer alternativen Sensorauslesung an dem mechanischen Koppelelement, die beispielsweise optisch oder piezoresistiv erfolgen könnte. Diese vierte Variante des erfindungsgemäßen Verfahrens kann in einem weiteren Ausführungsbeispiel der vorliegenden Erfindung auch zu einer Differenzialkondensatoranordnung weitergebildet sein.

In einer weiteren Alternative des Verfahrens zum Erfassen und/oder Messen von Schwingungen wird so verfahren, dass wenigstens ein Feder-Masse-Dämpfer-Schwinger des ersten Feder-Masse-Dämpfer-Schwingungssystems des mikromechanischen Sensors in einer Messrichtung innerhalb einer Schwingungsebene schwingt und das zweite Feder-Masse-Dämpfer-Schwingungssystem des mikromechanischen Sensors wenigstens einen Feder-Masse-Dämpfer-Schwinger aufweist, der in der Schwingungsebene in einer in einem Drehwinkel zur Messrichtung gedrehten Schrägrichtung schwingt, wobei der gedrehte Feder-Masse-Dämpfer-Schwinger zu den Kammstrukturen des ersten Feder-Masse-Dämpfer-Schwingers parallele Kammelektroden und eine Führung aufweist, die ihm eine Schwingung in einer durch den Drehwinkel bestimmten Schrägrichtung gestattet, wobei bei einer Gleichtaktschwingung die Kammelektroden des ersten und des zweiten Feder-Masse-Dämpfer-Schwingungssystems mit konstantem Elektrodenabstand und konstanter Elektrodenüberdeckung zueinander schwingen. Bei diesem Verfahren erfolgt auch eine mechanische Untersetzung der größeren Schwingungsamplitude im zweiten Feder-Masse-Dämpfer-Schwingungssystem. In dieser Ausführung wird aber auf das fertigungstechnisch aufwändig zu realisierende Koppelelement und auf die Koppelelektrode verzichtet und der Sensor wird aus relativ einfachen Strukturen ausgebildet. In diesem Verfahren wird der Schwinger des zweiten Feder-Masse-Dämpfer-Schwingungssystems in einem Drehwinkel zur Messrichtung und Schwingungsrichtung des ersten Feder-Masse-Dämpfer-Schwingers angeordnet. Dadurch wird die Schwingungsamplitude der gedrehten Schwinger vektoriell in eine Komponente parallel zur Messrichtung und eine Komponente senkrecht zur Messrichtung zerlegt. Dabei wird der Drehwinkel so groß gewählt, dass die vektorielle Komponente in Messrichtung die gewünschte Größe hat. Diese Variante des erfindungsgemäßen Verfahrens kann auch weitergebildet werden. Beispielsweise kann in einer weiteren Variante des Verfahrens in dem zweiten Feder-Masse-Dämpfer-Schwingungssystem ein zweiter Schwinger vorgesehen sein, der zu dem gedrehten Schwinger gespiegelt angeordnet ist und zur Ausbildung einer Differenzialkondensatoranordnung eingesetzt wird.

Die Aufgabe der vorliegenden Erfindung wird ferner ein Verfahren zur Herstellung eines oben beschriebenen erfindungsgemäßen mikromechanischen Sensors gelöst, wobei das Verfahren einer Oberflächen-Silizium-Technologie, einer oberflächennahe Silizium-technologie, eine Silizium-Volumen-Technologie, eine LIGA-Technologie oder ein Mehrkomponentenmikrospritzgussverfahren ist. Der erfindungsgemäße Sensor kann in verschiedensten Ausbildungen realisiert werden. Dabei weist der Sensor keine Merkmale auf, die nur von einer bestimmten Mikromechaniktechnologie realisiert werden können. Daher kann der Sensor in allen Mikromechaniktechnologien, wie in den genannten, gefertigt werden.

Die vorliegende Erfindung soll im Folgenden anhand von Figuren näher erläutert werden. Dabei zeigen
- Figur 1: eine Prinzipskizze eines ersten Ausführungsbeispiels eines erfindungsgemäßen Sensors;
- Figur 2: eine Prinzipskizze einer Weiterbildung des in Figur 1 gezeigten erfindungsgemäßen Sensors gemäß einem zweiten Ausführungsbeispiel der der vorliegenden Erfindung;
- Figur 3: eine weitere bevorzugte Weiterbildung des erfindungsgemäßen Sensors gemäß einem dritten Ausführungsbeispiel der vorliegenden Erfindung;
- Figur 4: eine Prinzipskizze eines alternativen Sensors gemäß einem vierten Ausführungsbeispiel der vorliegenden Erfindung;
- Figur 5: eine Prinzipskizze eines weitergebildeten Sensors gemäß einem fünften Ausführungsbeispiel der vorliegenden Erfindung;
- Figur 6: eine Prinzipskizze eines alternativen Sensors gemäß einem sechsten Ausführungsbeispiel der vorliegenden Erfindung;
- Figur 7: eine Prinzipskizze eines weitergebildeten Sensors gemäß einem siebten Ausführungsbeispiel der vorliegenden Erfindung;
- Figur 8: ein Diagramm, das mechanische Sensitivitäten als Funktion von Anregungsfrequenzen von Schwingern des erfindungsgemäßen Sensors mit unterschiedlichen Resonanzfrequenzen zeigt; und
- Figur 9: ein Diagramm, das kapazitive Sensitivitäten von einzelnen Schwingern und des erfindungsgemäßen Sensors als Funktion der Anregungsfrequenz darstellt.

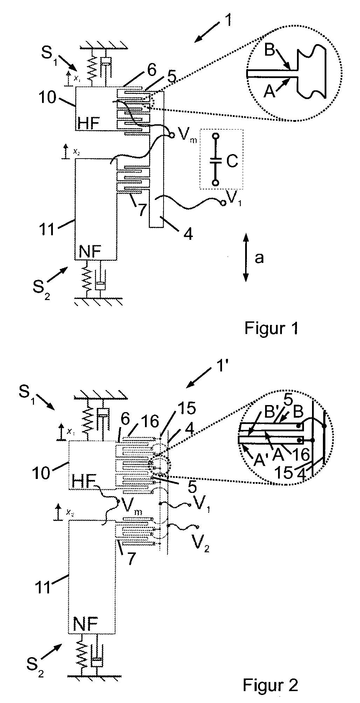

Fig. 1 zeigt schematisch ein einfaches Ausführungsbeispiel eines erfindungsgemäßen Sensors 1. Der Sensor 1 weist hier zwei Feder-Masse-Dämpfer-Schwingungssysteme S₁ und S₂ auf. Die Federn und Dämpfer der Feder-Masse-Dämpfer-Schwingungssysteme S₁ und S₂ sind schematisch mit selbsterklärenden Symbolen skizziert. Im Folgenden werden der Einfachheit halber die Feder-Masse-Dämpfer-Schwingungssysteme als Schwingungssysteme und die verwendeten Feder-Masse-Dämpfer-Schwinger als Schwinger bezeichnet.

Das Schwingungssystem S₁ weist in dem in Figur 1 gezeigten Ausführungsbeispiel nur einen Schwinger 10 auf. Das Schwingungssystem S₂ weist den Schwinger 11 auf. Das Schwingungssystem S₁ ist durch eine höhere Resonanzfrequenz als die des Schwingungssystems S₂ gekennzeichnet. Wegen seiner höheren Resonanzfrequenz sind der Schwinger 10 mit HF und der Schwinger 11 wegen seiner niedrigeren Resonanzfrequenz mit NF gekennzeichnet. Zur Ausbildung der höheren Resonanzfrequenz ist der Schwinger 10 mit einer kleineren Masse und mit kleineren geometrischen Abmessungen realisiert als der Schwinger 11.

Die Schwinger 10 und 11 sind so gelagert, dass sie in der Richtung a schwingen können. Die Schwinger 10 und 11 werden von einer externen Anregungsschwingung in der Richtung a angeregt. Dabei stellt sich an dem Betrachtungszeitpunkt an dem Schwinger 10 eine Amplitude x₁ und an dem Schwinger 11 eine Amplitude x₂ ein, die nicht maßstäblich, sondern zum Zweck der Erkennbarkeit dargestellt sind. Bei Anregungsfrequenzen, die weit unterhalb der Resonanzfrequenz des Schwingers 11 liegen, schwingen die Schwinger 10 und 11 im Gleichtakt. Der Schwinger 10 weist bewegliche Kammstrukturen 6 auf und der Schwinger 11 weist bewegliche Kammstrukturen 7 auf. Durch die direkte Verbindung der Kammstrukturen 6 und 7 zu den Schwingern 10 und 11 ist die Schwingung der bewegten Kammstrukturen in diesem Fall gleich der Bewegung der Schwinger 10 und 11.

Die bewegten Kammstrukturen 6 und 7 greifen in die ortsfeste Kammelektrode 4 mit ortsfesten Kammstrukturen 5 ein. Die Ruhelage der Kammstrukturen 6 und 7 befinden sich exzentrisch der Mitte zwischen den ortsfesten Kammstrukturen 5. Die Kammstrukturen 5, 6, 7 sind als zweidimensionale Platten zu verstehen, deren eine Dimension sich aus der Darstellungsebene heraus erstreckt. Kammstrukturen, die sich mit geringem Abstand gegenüber stehen und die elektrische Potenziale aufweisen, bilden Kapazitäten aus. Die Schwinger 10 und 11 sind elektrisch leitend miteinander verbunden, sodass die bewegten Elektroden 6 und 7 im Betrachtungszeitpunkt das Potenzial Vₘ aufweisen. Durch die Lage der ortsfesten Kammelektrode 4, die ein Potenzial V₁ aufweist, zu den Schwingern 10 und 11 mit bewegten Kammstrukturen 6 und 7, die ein gemeinsames Potenzial Vₘ aufweisen, wird in dem Sensor 1 die Kapazität C ausgebildet.

Die Kapazität C wird sowohl durch die Abstände der ortsfesten Kammstrukturen 5 von den bewegten Kammstrukturen 6 als auch durch die Abstände der ortsfesten Kammstrukturen 5 von den bewegten Kammstrukturen 7 beeinflusst. Eine ortsfeste Kammstruktur 5 ist in Fig. 1 in einem vergrößerten Ausschnitt dargestellt. Die Kammstrukturen 5 weisen zwei Seiten A und B auf. In dem erfindungsgemäßen Sensor 1 sind die bewegten Kammstrukturen 6 auf der Seite B der ortsfesten Kammstrukturen 5 angeordnet, und die bewegten Kammstrukturen 7 sind auf der Seite A der ortsfesten Kammstrukturen 5 angeordnet. Das bedeutet, dass der Abstand der Kammstrukturen 6 zu den Kammstrukturen 5 auf der Seite B kleiner ist als der Abstand der Kammstrukturen 6 zu der Seite A der Kammstrukturen 5 und dass der Abstand der bewegten Kammstrukturen 7 kleiner zu der Seite A der Kammstrukturen 5 als zu der Seite B der Kammstrukturen 5 ist. Wenn der Schwinger 10 mit einer Amplitude x₁ aus seiner Ruhelage ausgelenkt ist, ist der Abstand zwischen den Kammstrukturen 5 und den bewegten Kammstrukturen 6 vergrößert. Dadurch verkleinert sich die Kapazität zwischen Kammstrukturen 5 und 6, und diese Teilkapazität des Schwingungssystems S₁ an der Kapazität C wird kleiner. Die bewegten Kammstrukturen 7 des Schwingers 11 sind auf der anderen Seite A der ortsfesten Kammstrukturen 5 angeordnet. Eine Auslenkung des Schwingers 11 mit einer Amplitude x₂ führt zu einer Verkleinerung der Abstände zwischen den bewegten Kammstrukturen 7 und den ortsfesten Kammstrukturen 5, und die anteilige Kapazität des Schwingungssystems S₂ auf die Kapazität C wird größer. Auf diese Weise haben bei einer Gleichtaktschwingung der Schwinger 10 und 11 die Schwingungssysteme S₁ und S₂ einen inversen Einfluss auf die Größe der Kapazität C.

Gleichtaktschwingungen treten bei Frequenzen unterhalb der Resonanzfrequenz des Schwingers 11 und oberhalb der Resonanzfrequenz des Schwingers 10 auf. Bei diesen Frequenzen ist die Schwingungsamplitude x₂ des Schwingers 11 größer als die Schwingungsamplitude x₁ des Schwingers 10. Wenn die Schwinger 10 und 11 mit gleicher Zahl und Größe von Kammstrukturen ausgerüstet wären, würde der Schwinger 11 wegen seiner größeren Schwingungsamplitude die Kapazität C stärker verändern als der Schwinger 10. In dem erfindungsgemäßen Sensor ist der Einfluss des ersten und des zweiten Feder-Masse-Dämpfer-Schwingungssystems auf die Größe der Kapazität aber kompensiert. In dem mikromechanischen Sensor 1 wird die Kompensation dadurch erreicht, dass eine größere Anzahl beweglicher Kammstrukturen 6 als beweglicher Kammstrukturen 7 verwendet wird. Die dargestellte Anzahl von drei Kammstrukturen 7 und fünf Kammstrukturen 6 dient nur der Darstellung und der besseren Anschaulichkeit. In realen Sensoren werden in der Regel viel größere Anzahlen von Kammstrukturen verwendet.

Fig. 2 zeigt schematisch einen Sensor 1', der als Weiterbildung des Sensors 1 aus Figur 1 betrachtet werden kann. Komponenten des Sensors 1' mit gleichen Bezugszeichen wie in Fig. 1 haben die gleiche Funktion und sind bereits unter Fig. 1 beschrieben. Der mikromechanische Sensor 1' weist als Erweiterung gegenüber dem mikromechanischen Sensor 1 eine weitere ortsfeste Kammelektrode 15 mit weiteren ortsfesten Kammstrukturen 16 auf. Die weiteren ortsfesten Kammstrukturen 16 besitzen die zwei Seiten A' und B', die analog bezeichnet sind wie die zwei Seiten A und B der ortsfesten Kammstrukturen 5. Die weitere ortsfeste Kammelektrode 15 wird ähnlich wie die ortsfeste Kammelektrode 4 als Gegenelektrode für beide Schwingungssysteme S₁ und S₂ verwendet. Die bewegten Kammstrukturen 6 sind in ihrer Ruhelage in der Mitte zwischen den ortsfesten Kammstrukturen 5 und den weiteren ortsfesten Kammstrukturen 16 angeordnet. Ebenso sind die bewegten Kammstrukturen 7 in ihrer Ruhelage in der Mitte zwischen den Kammstrukturen 5 und 16 angeordnet. Die weitere ortsfeste Kammelektrode 15 weist im Betrachtungszeitpunkt das Potenzial V₂ auf, und zwischen dem Potenzial V₂ und dem Potenzial Vₘ der Schwinger wird eine weitere Kapazität ausgebildet. Diese Anordnung ist eine Differenzialkondensatoranordnung. Bei einer Amplitude x₁ des Schwingers 10 ist der Abstand zwischen bewegten Kammstrukturen 6 und ortsfesten Kammstrukturen 5 gegenüber der Ruhelage vergrößert und die Kapazität zwischen Kammstrukturen 5 und 6 entsprechend verkleinert. Gleichzeitig ist der Abstand der bewegten Kammstrukturen 6 zu den weiteren ortsfesten Kammstrukturen 16 verkleinert, und die Kapazität zwischen den Kammstrukturen 6 und 16 ist entsprechend vergrößert. In der Nachbarschaft der bewegten Kammstrukturen 7 sind die ortsfesten Kammstrukturen 5 und die weiteren ortsfesten Kammstrukturen 16 gespiegelt angeordnet. Das heißt, bei der zu x₁ gleichgerichteten Amplitude x₂ ist der Abstand zwischen den Kammstrukturen 7 und 5 in Relation zur Ruhelage vergrößert, und der Abstand zwischen den Kammstrukturen 7 und 16 ist verkleinert.

In dem Sensor 1' haben die bewegten Kammstrukturen 6 und 7 immer einen geringen Abstand zu einer der ortsfesten Kammstrukturen 5 oder 16. Dies ist günstig für die Funktion des Sensors 1'. Dem funktionellen Vorteil des Sensors 1' steht ein herstellungstechnischer Nachteil gegenüber. Wegen der räumlichen Nähe der Kammelektroden 4 und 15 können nicht beide Kammelektroden 4 und 15 als einfache räumliche Körper in der Ebene realisiert werden, in der auch die Kammstrukturen 5 und 16 ausgebildet sind. Stattdessen muss für wenigstens eine der ortsfesten Kammelektroden 4, 15 eine aufwändigere Kontaktierung realisiert werden. Diese zusätzliche Verbindung wird in dem Sensor 1' über eine Verbindungsebene realisiert, die parallel zu der Darstellungsebene liegt und daher nicht zweidimensional darstellbar ist. Die elektrische Kontaktierung der Kammstrukturen ist deshalb abweichend von der sonstigen Darstellung mit Hilfe schaltungstechnischer Linien skizziert.

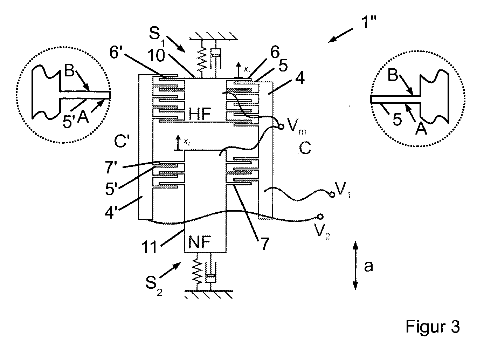

Fig. 3 zeigt einen weiteren alternativen erfindungsgemäßen mikromechanischen Sensor 1". Der Sensor 1" ist eine bevorzugte Weiterbildung des Sensors 1 aus Figur 1. In dem Sensor 1 " weist der Schwinger 10 zusätzlich zu den ersten bewegten Kammstrukturen 6 zweite bewegte Kammstrukturen 6' auf. Analog weist der niederfrequente Schwinger 11 neben den ersten bewegten Kammstrukturen 7 zweite bewegte Kammstrukturen 7' auf. Die zweiten bewegten Kammstrukturen 6' und 7' greifen in eine zweite ortsfeste Kammelektrode 4' ein. Die zweite ortsfeste Kammelektrode 4' weist zweite ortsfeste Kammstrukturen 5' auf, deren Seiten wie die Seiten der ortsfesten Kammstrukturen 5 mit A und B bezeichnet sind. Der Sensor 1" ist eine andere Art der Differenzialkondensatoranordnung, wobei die Schwinger 10 und 11 mit der ortsfesten Elektrode 4 eine bereits unter Fig. 1 beschriebene Kapazität ausbilden. Zusätzlich bilden hier die Schwinger 10 und 11 mit der zweiten ortsfesten Elektrode 4' eine zweite Kapazität aus. Dabei sind die Kammstrukturen 5, 6, 5', 6', 7, 7' so angeordnet, dass bei einer Bewegung eines Schwingers sein Einfluss auf die Größen der Kapazitäten C und C' invers ist. Das heißt, die bewegten Kammstrukturen sind jeweils auf der anderen Seite der ortsfesten Kammstrukturen angeordnet. Die bewegten Kammstrukturen 6 sind auf der Seite B der ortsfesten Kammstrukturen 5 und die bewegten Kammstrukturen 6' sind auf der Seite A der Kammstrukturen 5' angeordnet, und die Kammstrukturen 7 sind auf der Seite A der Kammstrukturen 5 angeordnet und die bewegten Kammstrukturen 7' sind auf der Seite B der ortsfesten Kammstrukturen 5' angeordnet. Bei dem Sensor 1" sind die ortsfesten Kammelektroden 4 und 4' räumlich voneinander getrennt. Dadurch können die ortsfesten Kammelektroden 4 und 4' in der gleichen Ebene gefertigt werden. Der Sensor 1" ist eine funktionell vorteilhafte Differenzialkondensatoranordnung, die kostengünstig hergestellt werden kann. Daher ist der Sensor 1" eine bevorzugte Ausführungsform der vorliegenden Erfindung.

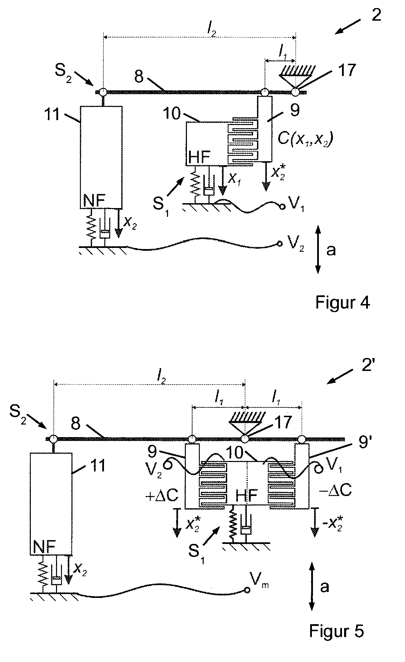

In Fig. 4 ist ein alternativer erfindungsgemäßer Sensor 2 schematisch dargestellt. Die größere Schwingungsamplitude des niederfrequenten Schwingers 11 wird hier durch ein mechanisches Koppelelement 8 auf eine kleinere Amplitude einer elektrostatischen Koppelelektrode 9 untersetzt. Das Untersetzungsverhältnis ergibt sich aus dem Verhältnis der Hebellänge I₁, der Länge zwischen einem Hebeldrehpunkt 17 und der elektrostatischen Koppelelektrode 9 und I₂, der Länge zwischen dem Hebeldrehpunkt 17 und dem niederfrequenten Schwinger 11. Die Bewegung der elektrostatischen Koppelelektrode 9 ist proportional zu der Bewegung des Schwingers 11, und ihre Amplitude ist an die Amplitude des Schwingers 10 angepasst. Dadurch ist bei einer Gleichtaktschwingung der Koppelelektrode 9 und des Schwingers 10 die Kapazität zwischen der Koppelelektrode 9 und dem Schwinger 10 konstant.

Fig. 5 zeigt schematisch einen weitergebildeten erfindungsgemäßen mikromechanischen Sensor 2', der als Erweiterung des Sensors 2 in Fig. 4 betrachtet werden kann. Das mechanische Koppelelement 8 ist bei diesem Sensor über den Drehpunkt hinaus verlängert. Vom Schwinger 11 aus wird jenseits des Drehpunktes 17 die Bewegungsrichtung an dem Koppelelement invertiert. Neben der Koppelelektrode 9 ist symmetrisch zu dem Drehpunkt eine weitere Koppelelektrode 9' angeordnet. Während die Bewegung der Koppelelektrode 9 proportional zur Bewegung des Schwingers 11 erfolgt, bewegt sich die Koppelelektrode 9' invertiert proportional zu dem Schwinger 11. Der Schwinger 10 weist erste und zweite bewegte Kammstrukturen auf, die elektrisch voneinander isoliert und im Betrachtungszeitpunkt mit den Potenzialen V₁ und V₂ verbunden sind und die mit den Koppelelektroden 9 und 9' eine Kapazität und eine zweite Kapazität und insgesamt eine Differenzialkondensatoranordnung ausbilden.

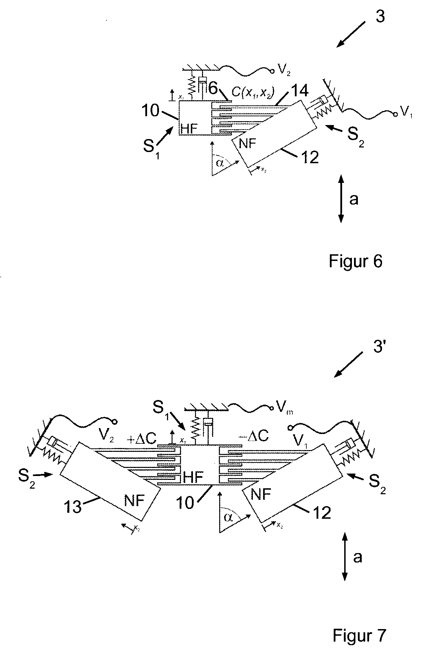

Fig. 6 zeigt in einer schematischen Darstellung einen mikromechanischen Sensor 3 gemäß einem weiteren Ausführungsbeispiel der vorliegenden Erfindung. In dem Sensor 3 ist der niederfrequente Schwinger 12 des Feder-Masse-Dämpfer-Schwingungssystems S₂ in einem Drehwinkel α gedreht zu dem Schwinger 10 des Feder-Masse-Dämpfer-Schwingungssystems S₁ angeordnet. Die Auslenkung x₂ des Schwingers 12 kann man als vektorielle Zerlegung in eine Auslenkung in Messrichtung a und eine Komponente senkrecht dazu darstellen. Die vektorielle Zerlegung der Auslenkung x₂ wird technisch dadurch realisiert, dass die Kammstrukturen 14 des Schwingers 12 mit ihrer Flächennormalen in Messrichtung a orientiert sind. Um sicher zu stellen, dass der Schwinger 12 in Richtung x₂ und nicht in Messrichtung a ausgelenkt wird, weist der Schwinger 12 entsprechende hier nicht dargestellte Führungen auf. In dem Sensor 3 wird nicht nur der Abstand zwischen den Kammstrukturen 6 und 14 beim Schwingen der Schwinger verändert, sondern zusätzlich auch die Elektrodenüberdeckung. Der Elektrodenabstand hat dabei jedoch einen deutlich stärkeren Einfluss auf die Größe der Kapazität C als die Elektrodenüberdeckung. In dem Sensor 3 erfolgt die Reduzierung der größeren mechanischen Sensitivität des niederfrequenten Schwingers 12 auf die geringere mechanische Sensitivität des hochfrequenten Schwingers 10 auf eine einfache und kostengünstige Weise. Der Sensor 3 kann auch auf einer kleinen Fläche realisiert werden, da er ohne flächenraubende Hilfsstrukturen auskommt.

Fig. 7 zeigt schematisch einen weiteren erfindungsgemäßen Sensor 3', der eine Weiterbildung des Sensors 3 aus Fig. 6 ist. Der Sensor 3' ist eine Differenzialkondensatoranordnung, bei der ein niederfrequenter Schwinger 12 gedreht angeordnet ist und mit dem hochfrequenten Schwinger 10 eine erste Kapazität ausbildet. Spiegelsymmetrisch zu dem Schwinger 12 ist in dem Sensor 3' ein weiterer gedrehter Schwinger 13 vorhanden, der mit dem hochfrequenten Schwinger 10 eine zweite Kapazität ausbildet. Die Kammstrukturen der Schwinger 12 und 13 sind an entgegengesetzten Seiten der Kammstrukturen des Schwingers 10 vorgesehen. Dadurch bewirkt eine Auslenkung des Schwingers 12 bei einem stillstehenden Schwinger 10 eine Verkleinerung der Kapazität und eine Auslenkung des Schwingers 13 in Richtung x₂ eine Vergrößerung der zweiten Kapazität. Dadurch entstehen die bereits beschriebenen Vorteile einer Differenzialkondensatoranordnung. Durch die symmetrische Anordnung von zwei Schwingern 12 und 13 wird eine Unwucht des Sensors 3' in die zu a orthogonale Richtung der Darstellungsebene vermieden. Dies kann sich beispielsweise vorteilhaft auf die Lebensdauer des Sensors 3' auswirken.

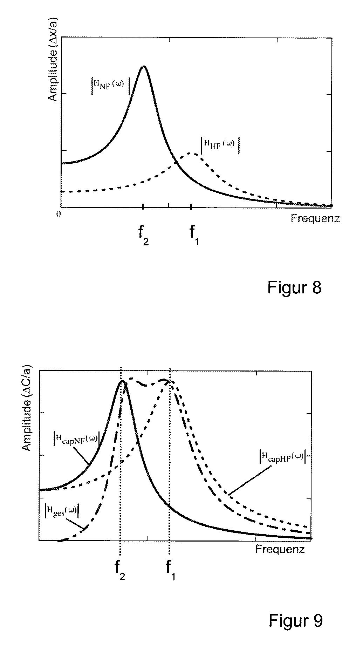

Fig. 8 veranschaulicht in einem Diagramm schematisch wesentliche Merkmale der mechanischen Sensitivitäten der in erfindungsgemäßen Sensoren eingesetzten zwei Schwingungssysteme S₁, S₂. Die Schwinger in den Schwingungssystemen S₁, S₂ werden optimal bei ihren Resonanzfrequenzen f₁ und f₂ angeregt. Bei diesen Frequenzen erreichen die Schwinger bei einer konstanten Anregungsamplitude ihre maximale Amplitude. Die Resonanzfrequenzen sind an den Maxima der Sensitivitätskurven in dem Diagramm zu erkennen. Bei kleinen Frequenzen, die in dem skizzenhaften Diagramm an der linken Ordinate abgelesen werden können, ist die Sensitivität des niederfrequenten Schwingers deutlich größer als die des hochfrequenten Schwingers. Bei Frequenzen über der Resonanzfrequenz fällt die mechanische Sensitivität der Schwinger stärker ab als bei Frequenzen unter den Resonanzfrequenzen. Dadurch sind auch die Differenzen der Schwingungsamplituden von hochfrequentem und niederfrequentem Schwinger bei großen Anregungsfrequenzen absolut betrachtet kleiner. Diese Sensitivitäten bei Anregungsfrequenzen über den Resonanzfrequenzen sind an der rechten Ordinate ablesbar. Wegen der großen Differenz der Schwingungsamplituden bei niedrigen Frequenzen ist in dem erfindungsgemäßen Sensor eine Kompensation der unterschiedlichen Schwingungsamplituden mit dem Ziel der Angleichung der Einflüsse beider Schwingungssysteme auf die Kapazität vorgesehen.

Fig. 9 zeigt die kapazitive Sensitivität eines hochfrequenten Feder-Masse-Dämpfer-Schwingungssystems |H_{capHF}(ω)|, die kapazitive Sensitivität |H_{capNF}(ω)| eines niederfrequenten Feder-Masse-Dämpfer-Schwingungssystems und die kapazitive Sensitivität |H_{ges}(ω)| eines erfindungsgemäßen Sensors als Funktion der Frequenz. Die Kurven |H_{capNF}(ω)| und |H_{capNF}(ω)| stellen die Kapazitätsänderungen der Teilkapazitäten in den Schwingungssystemen S₁ und S₂ dar, indem zu Messzwecken die elektronische Kopplung beider Schwingungssysteme deaktiviert ist. Diese Kurve ist visuell ähnlich skaliert wie die Kurve der mechanischen Sensitivität in Fig. 8. Die Strichlinie |H_{capHF}(ω)| stellt die kapazitive Sensitivität des hochfrequenten Schwingungssystems S₁ dar. Die mechanischen Sensitivitäten dieses hochfrequenten Schwingungssystems sind sowohl im niederfrequenten Bereich als auch im Bereich des Maximums an die kapazitiven Sensitivtäten des niederfrequenten Schwingers angepasst. Das heißt, die Einflüsse von dem hochfrequenten und dem niederfrequenten Feder-Masse-Dämpfer-Schwingungssystem auf die Kapazität sind erfindungsgemäß aneinander angeglichen. Die Strich-Punkt-Linie |H_{ges}(ω)| zeigt die kapazitive Sensitivität des gesamten Sensors. Bei niedrigen Frequenzen ist der Einfluss von hochfrequentem Schwingungssystem und niederfrequentem Schwingungssystem kompensiert und die resultierende gesamte kapazitive Sensitivität des Sensors ist Null. Das heißt, niederfrequente Anregungsfrequenzen werden in dem erfindungsgemäßen Sensor effektiv unterdrückt.

In der Praxis sind niederfrequente Störungen besonders bedeutsam, da sie mit großen Amplituden auftreten. Die gute Unterdrückung niederfrequenter Anregungsfrequenzen ist daher eine sehr günstig zu bewertende Eigenschaft der erfindungsgemäßen Sensoren. Der erfindungsgemäße Sensor erreicht seine maximale kapazitive Sensitivität in einem Frequenzband, das im Wesentlichen durch die beiden Resonanzfrequenzen f₁ und f₂ der beiden Schwingungssysteme S₁, S₂ definiert wird. Ein erfindungsgemäßer Sensor kann in vorteilhafter Weise mit einer optimierten Auswerteelektronik kombiniert werden, die auf die mechanische Filterung aufbaut, indem sie verfügbare Messgrößen effektiv auswertet, ohne Rücksicht auf niederfrequente Störsignale zu nehmen.

## Patentansprüche

1. Mikromechanischer Sensor (1, 1', 1", 2, 2', 3, 3') mit wenigstens zwei Feder-Masse-Dämpfer-Schwingern, die von einer gemeinsamen externen Schwingung anregbar sind, wobei der mikromechanische Sensor (1, 1', 1 ", 2, 2', 3, 3') ein erstes Feder-Masse-Dämpfer-Schwingungssystem (S₁) mit einer ersten Resonanzfrequenz (f₁) und ein zweites Feder-Masse-Dämpfer-Schwingungssystem (S₂) mit einer zweiten Resonanzfrequenz (f₂), die niedriger als die erste Resonanzfrequenz (f₁) ist, aufweist, **dadurch gekennzeichnet, dass** das erste und das zweite Feder-Masse-Dämpfer-Schwingungssystem (S₁, S₂) so ausgebildet sind, dass sie in einem Frequenzbereich unterhalb der zweiten Resonanzfrequenz (f₂) im Gleichtakt schwingen; dass das erste und das zweite Feder-Masse-Dämpfer-Schwingungssystem (S₁, S₂) Elektroden aufweisen, die in einer Messrichtung (a) um Elektrodenruhelagen mit Elektrodenauslenkungen, die gleich oder proportional zu Auslenkungen der Feder-Masse-Dämpfer-Schwinger (10, 11, 12, 13) sind, schwingen; dass das erste und das zweite Feder-Masse-Dämpfer-Schwingungssystem (S₁, S₂) durch wenigstens ein auf die Elektroden wirkendes elektrostatisches Feld unter Ausbildung wenigstens einer Kapazität (C) miteinander gekoppelt sind, wobei die Kapazität (C) durch wenigstens eine Elektrodenfläche und durch wenigstens einen Elektrodenabstand und/oder eine Elektrodenüberdeckung bestimmt ist, wobei die Elektrodenauslenkungen den Elektrodenabstand und/oder die Elektrodenüberdeckung und dadurch die Größe der Kapazität (C) beeinflussen und wobei bei einer Gleichtaktschwingung die Einflüsse des ersten und zweiten Feder-Masse-Dämpfer-Schwingungssystems (S₁, S₂) auf die Größe der Kapazität (C) kompensiert werden.

2. Mikromechanischer Sensor nach Anspruch 1, **dadurch gekennzeichnet, dass** der mikromechanische Sensor (1) eine ortsfeste Kammelektrode (4) mit ortsfesten Kammstrukturen (5) aufweist, dass das erste und das zweite Feder-Masse-Dämpfer-Schwingungssystem (S₁, S₂) bewegte Kammstrukturen (6, 7) aufweisen, die in die ortsfesten Kammstrukturen (5) eingreifen, wobei die bewegten Kammstrukturen (6) des ersten Feder-Masse-Dämpfer-Schwingungssystems (S₁) auf einer zweiten Seite (B) der ortsfesten Kammstrukturen (5) angeordnet sind und die bewegten Kammstrukturen (7) des zweiten Feder-Masse-Dämpfer-Schwingungssystems (S₂) auf einer ersten Seite (A) der ortsfesten Kammstrukturen (5) angeordnet sind und wobei alle bewegten Kammstrukturen (6, 7) elektrisch leitend miteinander verbunden sind.

3. Mikromechanischer Sensor nach Anspruch 2, **dadurch gekennzeichnet, dass** der mikromechanische Sensor (1 ') die ortsfeste Kammelektrode (4) mit ortsfesten Kammstrukturen (5) und eine weitere ortsfeste Kammelektrode (15) mit weiteren ortsfesten Kammstrukturen (16) aufweist, dass die bewegten Kammstrukturen (6, 7) des ersten und des zweiten Feder-Masse-Dämpfer-Schwingungssystems (S₁, S₂) zwischen die ortsfesten Kammstrukturen (5) und die weiteren ortsfesten Kammstrukturen (16) eingreifen, wobei die bewegten Kammstrukturen (6) des ersten Feder-Masse-Dämpfer-Schwingungssystems (S₁) auf einer zweiten Seite (B) der ortsfesten Kammstrukturen (5) und auf einer ersten Seite (A') der weiteren ortsfesten Kammstrukturen (16) angeordnet sind und die bewegten Kammstrukturen (7) des zweiten Feder-Masse-Dämpfer-Schwingungssystems (S₂) auf der ersten Seite (A) der ortsfesten Kammstrukturen (5) und auf der zweiten Seite (B') der weiteren ortsfesten Kammstrukturen (16) angeordnet sind und wobei alle bewegten Kammstrukturen (6, 7) elektrisch leitend miteinander verbunden sind.

4. Mikromechanischer Sensor nach Anspruch 2 oder 3, **dadurch gekennzeichnet, dass** der mikromechanische Sensor (1 ") eine erste ortsfeste Kammelektrode (4) mit ersten ortsfesten Kammstrukturen (5) und eine zweite ortsfeste Kammelektrode (4') mit zweiten ortsfesten Kammstrukturen (5'), zwischen welchen das erste und das zweite Feder-Masse-Dämpfer-Schwingungssystem (S₁, S₂) angeordnet sind, aufweist, wobei erste bewegte Kammstrukturen (6) des ersten Feder-Masse-Dämpfer-Schwingungssystems (S₁) auf einer zweiten Seite (B) der ersten ortsfesten Kammstrukturen (5) angeordnet sind, zweite bewegte Kammstrukturen (6') des ersten Feder-Masse-Dämpfer-Schwingungssystems (S₁) auf einer ersten Seite (A) der zweiten ortsfesten Kammstrukturen (5') angeordnet sind, erste bewegte Kammstrukturen (7) des zweiten Feder-Masse-Dämpfer-Schwingungssystems (S₂) auf der ersten Seite (A) der ersten ortsfesten Kammstrukturen (5) angeordnet sind und zweite bewegte Kammstrukturen (7') des zweiten Feder-Masse-Dämpfer-Schwingungssystems (S₂) auf der zweiten Seite (B) der zweiten ortsfesten Kammstrukturen (5') angeordnet sind.

5. Mikromechanischer Sensor nach einem der Ansprüche 2 oder 3, **dadurch gekennzeichnet, dass** das erste Feder-Masse-Dämpfer-Schwingungssystem (S₁) eine größere Anzahl von ortsfesten und bewegten Kammstrukturen als das zweite Feder-Masse-Dämpfer-Schwingungssystem (S₂) aufweist.

6. Mikromechanischer Sensor nach einem der vorhergehenden Ansprüche, **dadurch gekennzeichnet, dass** das erste Feder-Masse-Dämpfer-Schwingungssystem (S₁) wenigstens zwei Feder-Masse-Dämpfer-Schwinger aufweist.

7. Mikromechanischer Sensor nach Anspruch 1, **dadurch gekennzeichnet, dass** bei dem mikromechanischen Sensor (2, 2') eines der Feder-Masse-Dämpfer-Schwingungssysteme (S₂) ein mechanisches Koppelelement (8) und eine elektrostatische Koppelelektrode (9) aufweist, wobei das mechanische Koppelelement (8) für eine Unter- oder Übersetzung der Schwingungsamplitude eines Feder-Masse-Dämpfer-Schwingers (11) dieses Feder-Masse-Dämpfer-Schwingungssystems (S₂) auf eine kleinere oder größere Schwingungsamplitude der elektrostatischen Koppelelektrode (9) ausgebildet ist und wobei die Schwingungsamplitude des anderen, Feder-Masse-Dämpfer-Schwingungssystems (S₁) und der elektrostatischen Koppelelektrode (9) bei einer Gleichtaktschwingung gleich groß sind.

8. Mikromechanischer Sensor nach Anspruch 1, **dadurch gekennzeichnet, dass** bei dem mikromechanischen Sensor (3, 3') wenigstens ein Feder-Masse-Dämpfer-Schwinger (10) des ersten Feder-Masse-Dämpfer-Schwingungssystems (S₁) in einer Messrichtung (a) innerhalb einer Schwingungsebene schwingt und dass das zweite Feder-Masse-Dämpfer-Schwingungssystem (S₂) wenigstens einen in der Schwingungsebene in einem Drehwinkel (α) zur Messrichtung (a) gedrehten Feder-Masse-Dämpfer-Schwinger (12) aufweist, wobei der gedrehte Feder-Masse-Dämpfer-Schwinger (12) zu den Kammstrukturen (6) des ersten Feder-Masse-Dämpfer-Schwingers (10) parallele Kammstrukturen (14) und eine Führung aufweist, die ihm eine Schwingung in einer durch den Drehwinkel (α) bestimmten Schrägrichtung gestattet, wobei bei einer Gleichtaktschwingung die Schwingungsamplitude des gedrehten Feder-Masse-Dämpfer-Schwingers (12) eine Vektorkomponente in Messrichtung (a) aufweist, die gleich groß wie die Schwingungsamplitude des Feder-Masse-Dämpfer-Schwingers (10) des ersten Feder-Masse-Dämpfer-Schwingungssystems (S₁) ist.

9. Verfahren zum Erfassen und/oder Messen von Schwingungen mit einem mikromechanischen Sensor (1, 1', 1", 2, 2', 3, 3') mit wenigstens zwei Feder-Masse-Dämpfer-Schwingern (10, 11, 12, 13), die von einer gemeinsamen externen Schwingung angeregt werden, wobei der mikromechanische Sensor (1, 1', 1", 2, 2', 3, 3') ein erstes gedämpftes Feder-Masse-Dämpfer-Schwingungssystem (S₁) mit einer ersten Resonanzfrequenz (f₁) und ein zweites gedämpftes Feder-Masse-Dämpfer-Schwingungssystem (S₂) mit einer zweiten Resonanzfrequenz (f₂), die niedriger als die erste Resonanzfrequenz (f₁) ist, aufweist,
**dadurch gekennzeichnet,**
**dass** das erste und das zweite Feder-Masse-Dämpfer-Schwingungssystem (S₁, S₂) in einem Frequenzbereich unterhalb der zweiten Resonanzfrequenz (f₂) im Gleichtakt schwingen; dass das erste und das zweite Feder-Masse-Dämpfer-Schwingungssystem (S₁, S₂) Elektroden aufweisen, die in einer Messrichtung (a) um Elektrodenruhelagen mit Elektrodenauslenkungen, die gleich oder proportional zu Auslenkungen der Feder-Masse-Dämpfer-Schwinger (10, 11, 12, 13) sind, schwingen; dass das erste und das zweite Feder-Masse-Dämpfer-Schwingungssystem (S₁, S₂) durch wenigstens ein auf die Elektroden wirkendes elektrostatisches Feld unter Ausbildung einer Kapazität (C) miteinander gekoppelt werden, wobei die Kapazität (C) durch wenigstens eine Elektrodenfläche, durch wenigstens eine Elektrodenüberdeckung und durch wenigstens einen Elektrodenabstand bestimmt wird, wobei die Elektrodenauslenkungen den Elektrodenabstand und/oder die Elektrodenüberdeckung und dadurch die Größe der Kapazität (C) beeinflussen und wobei bei einer Gleichtaktschwingung das zweite Feder-Masse-Dämpfer-Schwingungssystem (S₂) den Einfluss des ersten Feder-Masse-Dämpfer-Schwingungssystems (S₁) auf die Größe der Kapazität (C) kompensiert und wobei die Größe der Kapazität (C) als Sensorausgangsgröße verwendet wird.

10. Verfahren nach Anspruch 9, **dadurch gekennzeichnet, dass** der mikromechanische Sensor (1) eine ortsfeste Kammelektrode (4) mit ortsfesten Kammstrukturen (5) aufweist, dass das erste und das zweite Feder-Masse-Dämpfer-Schwingungssystem (S₁, S₂) bewegte Kammstrukturen (6, 7) aufweisen, die in die ortsfesten Kammstrukturen (5) eingreifen, wobei durch die Anordnung der ortsfesten und der bewegten Kammstrukturen zueinander bei einer Gleichtaktschwingung gleichzeitig mit einer Vergrößerung des Elektrodenabstands und/oder einer Verkleinerung der Elektrodenüberdeckung der bewegten Kammstrukturen (6) des ersten Feder-Masse-Dämpfer-Schwingungssystems (S₁) von bzw. mit den ortsfesten Kammstrukturen (5) eine Verkleinerung des Elektrodenabstands und/oder eine Vergrößerung der Elektrodenüberdeckung der bewegten Kammstrukturen (7) des zweiten Feder-Masse-Dämpfer-Schwingungssystems (S₂) von bzw. mit den ortsfesten Kammstrukturen (5) vorgenommen wird, und wobei die bewegten Kammstrukturen (6, 7) elektrisch leitend miteinander verbunden werden.

11. Verfahren nach Anspruch 10, **dadurch gekennzeichnet, dass** der mikromechanische Sensor (1') die ortsfeste Kammelektrode (4) mit ortsfesten Kammstrukturen (5) und eine weitere ortsfeste elektrostatische Kammelektrode (15) mit weiteren ortsfesten Kammstrukturen (16) aufweist, dass die bewegten Kammstrukturen (6, 7) des ersten und des zweiten Feder-Masse-Dämpfer-Schwingungssystems (S₁, S₂) zwischen die ortsfesten Kammstrukturen (5) und die weiteren ortsfesten Kammstrukturen (16) eingreifen, wobei durch die Anordnung der ortsfesten und der bewegten Kammstrukturen zueinander und durch die zentrale Anordnung der bewegten Kammstrukturen (6, 7) zwischen den ortsfesten Kammstrukturen (5) und den weiteren ortsfesten Kammstrukturen (16) bei einer Gleichtaktschwingung gleichzeitig mit einer Vergrößerung des Elektrodenabstands und/oder einer Verkleinerung der Elektrodenüberdeckung der bewegten Kammstrukturen (6) des ersten Feder-Masse-Dämpfer-Schwingungssystems (S₁) von bzw. mit den ortsfesten Kammstrukturen (5) und mit einer Verkleinerung des Elektrodenabstands und/oder einer Vergrößerung der Elektrodenüberdeckung der bewegten Kammstrukturen (6) des ersten Feder-Masse-Dämpfer-Schwingungssystems (S₁) von bzw. mit den weiteren ortsfesten Kammstrukturen (16) eine Verkleinerung des Elektrodenabstands und/oder eine Vergrößerung der Elektrodenüberdeckung der bewegten Kammstrukturen (7) des zweiten Feder-Masse-Dämpfer-Schwingungssystems (S₂) von bzw. mit den ortsfesten Kammstrukturen (5) und eine Vergrößerung des Elektrodenabstands und/oder eine Verkleinerung der Elektrodenüberdeckung der bewegten Kammstrukturen (7) des zweiten Feder-Masse-Dämpfer-Schwingungssystems (S₂) von bzw. mit den weiteren ortsfesten Kammstrukturen (16) vorgenommen wird, und wobei die bewegten Kammstrukturen (6, 7) elektrisch leitend miteinander verbunden werden.

12. Verfahren nach Anspruch 10 oder 11, **dadurch gekennzeichnet, dass** der mikromechanische Sensor (1 ") eine erste ortsfeste Kammelektrode (4) mit ersten ortsfesten Kammstrukturen (5) und eine zweite ortsfeste Kammelektrode (4') mit zweiten ortsfesten Kammstrukturen (5') aufweist, dass das erste und das zweite Feder-Masse-Dämpfer-Schwingungssystem (S₁, S₂) erste und zweite bewegte Kammstrukturen (6, 6', 7, 7') aufweisen, wobei die ersten bewegten Kammstrukturen (6, 7) in die ersten ortsfesten Kammstrukturen (5) und die zweiten bewegten Kammstrukturen (6', 7') in die zweiten ortsfesten Kammstrukturen (5') eingreifen, wobei durch die Anordnung der ersten und zweiten bewegten Kammstrukturen (6, 6', 7, 7') und der ersten und zweiten ortsfesten Kammstrukturen (5, 5') zueinander bei einer Gleichtaktschwingung gleichzeitig mit einer Vergrößerung des Elektrodenabstands und/oder einer Verkleinerung der Elektrodenüberdeckung der ersten bewegten Kammstrukturen (6) des ersten Feder-Masse-Dämpfer-Schwingungssystems (S₁) von bzw. mit den ersten ortsfesten Kammstrukturen (5) eine Verkleinerung des Elektrodenabstands und/oder eine Vergrößerung der Elektrodenüberdeckung der ersten bewegten Kammstrukturen (7) des zweiten Feder-Masse-Dämpfer-Schwingungssystems (S₂) von bzw. mit den ersten ortsfesten Kammstrukturen (5), eine Verkleinerung des Elektrodenabstands und/oder eine Vergrößerung der Elektrodenüberdeckung der zweiten bewegten Kammstrukturen (6') des ersten Feder-Masse-Dämpfer-Schwingungssystems (S₁) von bzw. mit den zweiten ortsfesten Kammstrukturen (5') und eine Vergrößerung des Elektrodenabstands und/oder eine Verkleinerung der Elektrodenüberdeckung der zweiten bewegten Kammstrukturen (6') des zweiten Feder-Masse-Dämpfer-Schwingungssystems (S₂) von den zweiten ortsfesten Kammstrukturen (5') realisiert wird, wobei alle bewegten Kammstrukturen (6, 6', 7, 7') elektrisch leitend miteinander verbunden werden.

13. Verfahren nach Anspruch 9, **dadurch gekennzeichnet, dass** wenigstens eines der Feder-Masse-Dämpfer-Schwingungssysteme (S₂) des mikromechanischen Sensors (2, 2') ein mechanisches Koppelelement (8) und eine elektrostatische Koppelelektrode (9) aufweist, wobei das mechanische Koppelelement (8) die Schwingungsamplitude des Feder-Masse-Dämpfer-Schwingers des Feder-Masse-Dämpfer-Schwingungssystems (S₂) des mikromechanischen Sensors (2, 2') auf eine kleinere oder größere Schwingungsamplitude der elektrostatischen Koppelelektrode (9) unter- oder übersetzt, wobei die Elektrode des anderen Feder-Masse-Dämpfer-Schwingungssystems (S₁) und die elektrostatische Koppelelektrode (9) bei einer Gleichtaktschwingung des ersten und zweiten Feder-Masse-Dämpfer-Schwingungssystems (S₁, S₂) mit konstantem Elektrodenabstand und konstanter Elektrodenüberdeckung zueinander schwingen.

14. Verfahren nach Anspruch 9, **dadurch gekennzeichnet, dass** wenigstens ein Feder-Masse-Dämpfer-Schwinger (10) des ersten Feder-Masse-Dämpfer-Schwingungssystems (S₁) des mikromechanischen Sensors (3, 3') in einer Messrichtung (a) innerhalb einer Schwingungsebene schwingt und das zweite Feder-Masse-Dämpfer-Schwingungssystem (S₂) des mikromechanischen Sensors (3, 3') wenigstens einen Feder-Masse-Dämpfer-Schwinger (11) aufweist, der in der Schwingungsebene in einer in einem Drehwinkel (α) zur Messrichtung (a) gedrehten Schrägrichtung schwingt, wobei der gedrehte Feder-Masse-Dämpfer-Schwinger (11) zu den Kammstrukturen (6) des ersten Feder-Masse-Dämpfer-Schwingers (S₁) parallele Kammelektroden (14) und eine Führung aufweist, die ihm eine Schwingung in einer durch den Drehwinkel (α) bestimmten Schrägrichtung gestattet, wobei bei einer Gleichtaktschwingung die Kammelektroden (6, 14) des ersten und des zweiten Feder-Masse-Dämpfer-Schwingungssystems (S₁, S₂) mit konstantem Elektrodenabstand und konstanter Elektrodenüberdeckung zueinander schwingen.

15. Verfahren zur Herstellung eines mikromechanischen Sensors (1, 1', 1", 2, 2', 3, 3') nach einem der Ansprüche 1 bis 8 , **dadurch gekennzeichnet, dass** das Verfahren eine Oberflächen-Silizium-Technologie, eine oberflächennahe Silizium-Technologie, eine Silizium-Volumentechnologie, eine LIGA-Technologie oder ein Mehrkomponentenmikrospritzgussverfahren ist.

## Claims

1. Micromechanical sensor (1, 1', 1", 2, 2', 3, 3') having at least two spring-mass-damper oscillators which can be excited by a common external oscillation, with the micromechanical sensor (1, 1', 1", 2, 2', 3, 3') having a first spring-mass-damper oscillating system (S₁) with a first resonant frequency (f₁) and a second spring-mass-damper oscillating system (S₂) with a second resonant frequency (f₂) which is lower than the first resonant frequency (f₁), **characterized in that** the first and the second spring-mass-damper oscillating systems (S₁, S₂) are designed such that they oscillate in-phase; **in that** the first and the second spring-mass-damper oscillating systems (S₁, S₂) have electrodes which oscillate in a measurement direction (a) about electrode rest positions with electrode deflections which are equal to or proportional to deflections of the spring-mass-damper oscillators (10, 11, 12, 13); **in that** the first and the second spring-mass-damper oscillating systems (S₁, S₂) are coupled to one another by means of at least one electrostatic field, which acts on the electrodes, forming at least one capacitance (C) with the capacitance (C) being governed by at least one electrode area and by at least one electrode separation and/or an electrode coverage, with the electrode deflections influencing the electrode separation and/or the electrode coverage and thus influencing the magnitude of the capacitance (C), and with the influences of the first and second spring-mass-damper oscillating systems (S₁, S₂) on the magnitude of the capacitance (C) being compensated for in the case of an in-phase oscillation.

2. Micromechanical sensor according to claim 1, **characterized in that** the micromechanical sensor (1) has a fixed-position comb electrode (4) with fixed-position comb structures (5), **in that** the first and the second spring-mass-damper oscillating systems (S₁, S₂) have moving comb structures (6, 7) which engage in the fixed-position comb structures (5), with the moving comb structures (6) of the first spring-mass-damper oscillating system (S₁) being arranged on a second side (B) of the fixed-position comb structures, and with the moving comb structures (7) of the second spring-mass-damper oscillating system (S₂) being arranged on a first side (A) of the fixed-position comb structures (5), and with all the moving comb structures (6, 7) being electrically conductively connected to one another.

3. Micromechanical sensor according to claim 2, **characterized in that** the micromechanical sensor (1') has the fixed-position comb electrode (4) with fixed-position comb structures (5) and a further fixed-position comb electrode (15) with further fixed-position comb structures (16), **in that** the moving comb structures (6, 7) of the first and of the second spring-mass-damper oscillating systems (S₁, S₂) engage between the fixed-position comb structures (5) and the further fixed-position comb structures (16), with the moving comb structures (6) of the first spring-mass-damper oscillating system (S₁) being arranged on the second side (B) of the fixed-position comb structures (5) and on a first side (A') of the further fixed-position comb structures (16) and with the moving comb structures (7) of the second spring-mass-damper oscillating systems (S₂) being arranged on the first side (A) of the fixed-position comb structures (5) and on the second side (B') of the further fixed-position comb structures (16), and with all the moving comb structures (6, 7) being electrically conductively connected to one another.

4. Micromechanical sensor according to claim 2 or 3, **characterized in that** the micromechanical sensor (1 ") has a first fixed-position comb electrode (4) with first fixed-position comb structures (5) and a second fixed-position comb electrode (4') with second fixed-position comb structures (5'), between which the first and the second spring-mass-damper oscillating systems (S₁, S₂) are arranged, with first moving comb structures (6) of the first spring-mass-damper oscillating system (S₁) being arranged on the second side (B) of the first fixed-position comb structures (5), with second moving comb structures (6') of the first spring-mass-damper oscillating system (S₁) being arranged on a first side (A) of the second fixed-position comb structures (5'), with first moving comb structures (7) of the second spring-mass-damper oscillating system (S₂) being arranged on the first side (A) of the first fixed-position comb structures (5), and with second moving comb structures (7') of the second spring-mass-damper oscillating system (S₂) being arranged on the second side (B) of the second fixed-position comb structures (5').

5. Micromechanical sensor according to one of claims 2 or 3, **characterized in that** the first spring-mass-damper oscillating system (S₁) has a greater number of fixed-position and moving comb structures than the second spring-mass-damper oscillating system (S₂).

6. Micromechanical sensor according to one of the preceding claims, **characterized in that** the first spring-mass-damper oscillating system (S₁) has at least two spring-mass-damper oscillators.

7. Micromechanical sensor according to claim 1, **characterized in that**, in the case of the micromechanical sensor (2, 2'), one of the spring-mass-damper oscillating systems (S₂) has a mechanical coupling element (8) and an electrostatic coupling electrode (9), with the mechanical coupling element (8) being designed for stepping down or stepping up the oscillation amplitude of one spring-mass-damper oscillator (11) in this spring-mass-damper oscillating system (S₂) to a lower or higher oscillation amplitude of the electrostatic coupling electrode (9), and with the oscillation amplitude of the other spring-mass-damper oscillating system (S₁) and of the electrostatic coupling electrode (9) being of equal magnitude in the case of an in-phase oscillation.

8. Micromechanical sensor according to claim 1, **characterized in that**, in the case of the micromechanical sensor (3, 3'), at least one spring-mass-damper oscillator (10) in the first spring-mass-damper oscillating system (S₁) oscillates in a measurement direction (a) on an oscillation plane, and **in that** the second spring-mass-damper oscillating system (S₂) has at least one spring-mass-damper oscillator (12) which is rotated to a rotation angle (α) with respect to the measurement direction (a) on the oscillation plane, with the rotated spring-mass-damper oscillator (12) having comb structures (14), which are parallel to the comb structures (6) of the first spring-mass-damper oscillator (10), and a guide which allows it to oscillate in an oblique direction which is governed by the rotation angle (α), with the oscillation amplitude of the rotated spring-mass-damper oscillator (12) in the case of an in-phase oscillation having a vector component in the measurement direction (a) which is of equal magnitude to the oscillation amplitude of the spring-mass-damper oscillator (10) in the first spring-mass-damper oscillating system (S₁).

9. Method for detection and/or measurement of oscillations by means of a micromechanical sensor (1, 1', 1", 2, 2', 3, 3') with at least two spring-mass-damper oscillators (10, 11, 12, 13) which are excited by a common external oscillation, with the micromechanical sensor (1, 1', 1", 2, 2', 3, 3') having a first damped spring-mass-damper oscillating system (S₁) with a first resonant frequency (f₁) and a second damped spring-mass-damper oscillating system (S₂) with a second resonant frequency (f₂), which is lower than the first resonant frequency (f₁),
**characterized in that**,
the first and the second spring-mass-damper oscillating systems (S₁, S₂) oscillate in-phase in a frequency range below the second resonant frequency (f₂); **in that** the first and the second spring-mass-damper oscillating systems (S₁, S₂) have electrodes which oscillate in a measurement direction (a) about electrode rest positions with electrode deflections which are equal to or proportional to deflections of the spring-mass-damper oscillators (10, 11, 12, 13); **in that** the first and the second spring-mass-damper oscillating systems (S₁, S₂) are coupled to one another by means of at least one electrostatic field, which acts on the electrodes, forming at least one capacitance (C) with the capacitance (C) being governed by at least one electrode area, by at least one electrode coverage and/or by at least one electrode separation, with the electrode deflections influencing the electrode separation and/or the electrode coverage and thus influencing the magnitude of the capacitance (C), and with the influence of the first spring-mass-damper oscillating system (S₁) on the magnitude of the capacitance (C) being compensated for by the second spring-mass-damper oscillating system (S₂) in the case of a synchronous oscillation, and with the magnitude of the capacitance (C) being used as a sensor output variable.

10. Method according to claim 9, **characterized in that** the micromechanical sensor (1) has a fixed-position comb electrode (4) with fixed-position comb structures (5), **in that** the first and the second spring-mass-damper oscillating systems (S₁, S₂) have moving comb structures (6, 7) which engage in the fixed-position comb structures (5), with the arrangement of the fixed-position and the moving comb structures with respect to one another resulting, in the case of an in-phase oscillation, at the same time as an increase in the electrode separation and/or a reduction in the electrode coverage of the moving comb structures (6) of the first spring-mass-damper oscillating system (S₁) by and/or with the fixed-position comb structures (5), in a reduction in the electrode separation and/or an increase in the electrode coverage of the moving comb structures (7) of the second spring-mass-damper oscillating system (S₂) by and/or with the fixed-position comb structures (5), and with the moving comb structures (6, 7) being electrically conductively connected to one another.

11. Method according to claim 10, **characterized in that** the micromechanical sensor (1') has the fixed-position comb electrode (4) with fixed-position comb structures (5) and a further fixed-position electrostatic comb electrode (15) with further fixed-position comb structures (16), **in that** the moving comb structures (6, 7) of the first and of the second spring-mass-damper oscillating systems (S₁, S₂) engage between the fixed-position comb structures (5) and the further fixed-position comb structures (16), with the arrangement of the fixed-position and moving comb structures with respect to one another and the central arrangement of the moving comb structures (6, 7) between the fixed-position comb structures (5) and the further fixed-position comb structures (16) resulting, in the case of an in-phase oscillation, at the same time as an increase in the electrode separation and/or a reduction in the electrode coverage of the moving comb structures (6) of the first spring-mass-damper oscillating system (S₁) by and/or with the fixed-position comb structures (5) and as a reduction in the electrode separation and/or an increase in the electrode coverage of the moving comb structures (6) of the first spring-mass-damper oscillating system (S₁) by and/or with the further fixed-position comb structures (16), in a reduction in the electrode separation and/or an increase in the electrode coverage of the moving comb structures (7) of the second spring-mass-damper oscillating system (S₂) by and/or with the fixed-position comb structures (5), and an increase in the electrode separation and/or a reduction in the electrode coverage of the moving comb structures (7) of the second spring-mass-damper oscillating system (S₂) by and/or with the further fixed-position comb structures (16), with the moving comb structures (6, 7) being electrically conductively connected to one another.

12. Method according to claim 10 or 11, **characterized in that** the micromechanical sensor (1") has a first fixed-position comb electrode (4) with first fixed-position comb structures (5) and a second fixed-position comb electrode (4') with second fixed-position comb structures (5'), **in that** the first and the second spring-mass-damper oscillating systems (S₁, S₂) have first and second moving comb structures (6, 6', 7, 7'), with the first moving comb structures (6, 7) engaging in the first fixed-position comb structures (5), and with the second moving comb structures (6', 7') engaging in the second fixed-position comb structures (5'), with the arrangement of the first and second moving comb structures (6, 6', 7, 7') and of the first and second fixed-position comb structures (5, 5') which respect to one another resulting, in the case of an in-phase oscillation, at the same time as an increase in the electrode separation and/or a reduction in the electrode coverage of the first moving comb structures (6) of the first spring-mass-damper oscillating system (S₁) by and/or with the first fixed-position comb structures (5), in a reduction in the electrode separation and/or an increase in the electrode coverage of the first moving comb structures (7) of the second spring-mass-damper oscillating system (S₂) by and/or with the first fixed-position comb structures (5), a reduction in the electrode separation and/or an increase in the electrode coverage of the second moving comb structures (6') in the first spring-mass-damper oscillating system (S₁) by and/or with the second fixed-position comb structures (5'), and an increase in the electrode separation and/or a reduction in the electrode coverage of the second moving comb structures (6') of the second spring-mass-damper oscillating system (S₂) by the second fixed-position comb structures (5'), with all the moving comb structures (6, 6', 7, 7') being electrically conductively connected to one another.

13. Method according to claim 9, **characterized in that** at least one of the spring-mass-damper oscillating systems (S₂) in the micromechanical sensor (2, 2') has a mechanical coupling element (8) and an electrostatic coupling electrode (9), with the mechanical coupling element (8) stepping down or stepping up the oscillation amplitude of the spring-mass-damper oscillator in the spring-mass-damper oscillating system (S₂) in the micromechanical sensor (2, 2') to a lower or higher oscillation amplitude of the electrostatic coupling electrode (9), and with the electrode in the other spring-mass-damper oscillating system (S₁) and the electrostatic coupling electrode (9) oscillating with respect to one another during an in-phase oscillation of the first and second spring-mass-damper oscillating systems (S₁, S₂) with a constant electrode separation and constant electrode coverage.

14. Method according to claim 9, **characterized in that** at least one spring-mass-damper oscillator (10) in the first spring-mass-damper oscillating system (S₁) in the micromechanical sensor (3, 3') oscillates in a measurement direction (a) on an oscillation plane and the second spring-mass-damper oscillating system (S₂) in the micromechanical sensor (3, 3') has at least one spring-mass-damper oscillator (11) which oscillates on the oscillation plane in an oblique direction, which is rotated at a rotation angle (α) with respect to the measurement direction (a), with the rotated spring-mass-damper oscillator (11) having comb electrodes (14) which are parallel to the comb structures (6) in the first spring-mass-damper oscillator (S₁), and a guide which allows it to oscillate in an oblique direction which is governed by the rotation angle (α), with the comb electrodes (6, 14) in the first and the second spring-mass-damper oscillating systems (S₁, S₂) oscillating with a constant electrode separation and constant electrode coverage during an in-phase oscillation.

15. Method for the production of a micromechanical sensor (1, 1', 1", 2, 2', 3, 3') according to one of claims 1 to 8, **characterized in that** the method is a surface-silicon technology, a silicon technology close to the surface, a silicon volume technology, an LIGA technology or a multi-component microscopic injection-molding method.

## Revendications

1. Détecteur micromécanique (1, 1', 1", 2, 2', 3, 3') comprenant au moins deux amortisseurs-oscillateurs à ressort-masse qui peuvent être excités par une oscillation externe commune, le détecteur micromécanique (1, 1', 1", 2, 2', 3, 3') présentant un premier système oscillant-amortisseur à masse-ressort (S₁) ayant une première fréquence de résonance (f₁) et un deuxième système oscillant-amortisseur à masse-ressort (S₂) ayant une deuxième fréquence de résonance (f₂) qui est inférieure à la première fréquence de résonance (f₁), **caractérisé en ce que** le premier et le deuxième système oscillant-amortisseur à masse-ressort (S₁, S₂) sont configurés de telle sorte qu'ils oscillent de manière synchrone dans une plage de fréquences au-dessous de la deuxième fréquence de résonance (f₂); **en ce que** le premier et le deuxième système oscillant-amortisseur à masse-ressort (S₁, S₂) présentent des électrodes qui oscillent dans une direction de mesure (a) autour des positions de repos des électrodes avec des excursions d'électrode qui sont égales ou proportionnelles aux excursions des amortisseurs-oscillateurs à ressort-masse (10, 11, 12, 13); **en ce que** le premier et le deuxième système oscillant-amortisseur à masse-ressort (S₁, S₂) sont couplés l'un avec l'autre par au moins un champ électrostatique agissant sur les électrodes en formant au moins une capacité (C), la capacité (C) étant déterminée par au moins une surface d'électrode et par au moins un écart entre électrodes et/ou un chevauchement d'électrode, les excursions d'électrode influençant l'écart entre électrodes et/ou le chevauchement d'électrode et ainsi la valeur de la capacité (C) et, dans le cas d'une oscillation synchrone, les influences du premier et du deuxième système oscillant-amortisseur à masse-ressort (S₁, S₂) sur la valeur de la capacité (C) étant compensées.

2. Détecteur micromécanique selon la revendication 1, **caractérisé en ce que** le détecteur micromécanique (1) présente une électrode en peigne (4) fixe ayant des structures de peigne fixes (5), **en ce que** le premier et le deuxième système oscillant-amortisseur à masse-ressort (S₁, S₂) présentent des structures de peigne mobiles (6, 7) qui viennent en prise dans les structures de peigne fixes (5), les structures de peigne mobiles (6) du premier système oscillant-amortisseur à masse-ressort (S₁) étant disposées sur un deuxième côté (B) des structures de peigne fixes (5) et les structures de peigne mobiles (7) du deuxième système oscillant-amortisseur à masse-ressort (S₂) étant disposées sur un premier côté (A) des structures de peigne fixes (5) et toutes les structures de peigne mobiles (6, 7) étant reliées entre elles de manière électriquement conductrice.

3. Détecteur micromécanique selon la revendication 2, **caractérisé en ce que** le détecteur micromécanique (1') présente l'électrode en peigne (4) fixe ayant des structures de peigne fixes (5) et une électrode en peigne (15) fixe supplémentaire ayant des structures de peigne fixes (16) supplémentaires, **en ce que** les structures de peigne mobiles (6, 7) du premier et du deuxième système oscillant-amortisseur à masse-ressort (S₁, S₂) viennent en prise entre les structures de peigne fixes (5) et les structures de peigne fixes (16) supplémentaires, les structures de peigne mobiles (6) du premier système oscillant-amortisseur à masse-ressort (S₁) étant disposées sur un deuxième côté (B) des structures de peigne fixes (5) et sur un premier côté (A') des structures de peigne fixes (16) supplémentaires et les structures de peigne mobiles (7) du deuxième système oscillant-amortisseur à masse-ressort (S₂) étant disposées sur le premier côté (A) des structures de peigne fixes (5) et sur le deuxième côté (B') des structures de peigne fixes (16) supplémentaires et toutes les structures de peigne mobiles (6, 7) étant reliées entre elles de manière électriquement conductrice.

4. Détecteur micromécanique selon la revendication 2 ou 3, **caractérisé en ce que** le détecteur micromécanique (1 ") présente une première électrode en peigne (4) fixe ayant des structures de peigne fixes (5) et une deuxième électrode en peigne (4') fixe ayant des deuxièmes structures de peigne fixes (5'), entre lesquelles sont disposés le premier et le deuxième système oscillant-amortisseur à masse-ressort (S₁, S₂), des premières structures de peigne mobiles (6) du premier système oscillant-amortisseur à masse-ressort (S₁) étant disposées sur un deuxième côté (B) des premières structures de peigne fixes (5), des deuxièmes structures de peigne mobiles (6') du premier système oscillant-amortisseur à masse-ressort (S₁) étant disposées sur un premier côté (A) des deuxièmes structures de peigne fixes (5'), des premières structures de peigne mobiles (7) du deuxième système oscillant-amortisseur à masse-ressort (S₂) étant disposées sur le premier côté (A) des premières structures de peigne fixes (5) et des deuxièmes structures de peigne mobiles (7') du deuxième système oscillant-amortisseur à masse-ressort (S₂) étant disposées sur le deuxième côté (B) des deuxièmes structures de peigne fixes (5').

5. Détecteur micromécanique selon la revendication 2 ou 3, **caractérisé en ce que** le premier système oscillant-amortisseur à masse-ressort (S₁) présente un plus grand nombre de structures de peigne fixes et mobiles que le deuxième système oscillant-amortisseur à masse-ressort (S₂).

6. Détecteur micromécanique selon l'une des revendications précédentes, **caractérisé en ce que** le premier système oscillant-amortisseur à masse-ressort (S₁) présente au moins deux amortisseurs-oscillateurs à ressort-masse.

7. Détecteur micromécanique selon la revendication 1, **caractérisé en ce qu'**avec le détecteur micromécanique (2, 2'), l'un des systèmes oscillants-amortisseurs à masse-ressort (S₂) présente un élément de couplage mécanique (8) et une électrode de couplage (9) électrostatique, l'élément de couplage mécanique (8) étant configuré pour une démultiplication ou une amplification de l'amplitude d'oscillation d'un amortisseur-oscillateur à ressort-masse (11) de ce système oscillant-amortisseur à masse-ressort (S₂) à une amplitude d'oscillation plus petite ou plus grande de l'électrode de couplage (9) électrostatique et les amplitudes d'oscillation de l'autre système oscillant-amortisseur à masse-ressort (S₁) et de l'électrode de couplage (9) électrostatique étant égales dans le cas d'une oscillation synchrone.

8. Détecteur micromécanique selon la revendication 1, **caractérisé en ce qu'**avec le détecteur micromécanique (3, 3'), au moins un amortisseur-oscillateur à ressort-masse (10) du premier système oscillant-amortisseur à masse-ressort (S₁) oscille dans une direction de mesure (a) à l'intérieur d'un plan d'oscillation et **en ce que** le deuxième système oscillant-amortisseur à masse-ressort (S₂) présente au moins un amortisseur-oscillateur à ressort-masse (12) pivoté dans le plan d'oscillation selon un angle de rotation (α) par rapport à la direction de mesure (a), l'amortisseur-oscillateur à ressort-masse (12) pivoté présentant des structures de peigne (14) parallèles aux structures de peigne (6) du premier amortisseur-oscillateur à ressort-masse (10) et un guide qui lui permet d'effectuer une oscillation dans une direction oblique déterminée par l'angle de rotation (α), l'amplitude d'oscillation de l'amortisseur-oscillateur à ressort-masse (12) pivoté, dans le cas d'une oscillation synchrone, présentant une composante vectorielle dans la direction de mesure (a) qui est égale à l'amplitude d'oscillation de l'amortisseur-oscillateur à ressort-masse (10) du premier système oscillant-amortisseur à masse-ressort (S₁).

9. Procédé pour détecter et/ou mesurer des oscillations avec un détecteur micromécanique (1, 1', 1", 2, 2', 3, 3') comprenant au moins deux amortisseurs-oscillateurs à ressort-masse (10, 11, 12, 13) qui sont excités par une oscillation externe commune, le détecteur micromécanique (1, 1', 1", 2, 2', 3, 3') présentant un premier système oscillant-amortisseur à masse-ressort (S₁) amorti ayant une première fréquence de résonance (f₁) et un deuxième système oscillant-amortisseur à masse-ressort (S₂) amorti ayant une deuxième fréquence de résonance (f₂) qui est inférieure à la première fréquence de résonance (f₁),
**caractérisé en ce que**
le premier et le deuxième système oscillant-amortisseur à masse-ressort (S₁, S₂) oscillent de manière synchrone dans une plage de fréquences au-dessous de la deuxième fréquence de résonance (f₂); **en ce que** le premier et le deuxième système oscillant-amortisseur à masse-ressort (S₁, S₂) présentent des électrodes qui oscillent dans une direction de mesure (a) autour des positions de repos des électrodes avec des excursions d'électrode qui sont égales ou proportionnelles aux excursions des amortisseurs-oscillateurs à ressort-masse (10, 11, 12, 13); **en ce que** le premier et le deuxième système oscillant-amortisseur à masse-ressort (S₁, S₂) sont couplés l'un avec l'autre par au moins un champ électrostatique agissant sur les électrodes en formant une capacité (C), la capacité (C) étant déterminée par au moins une surface d'électrode, par au moins un chevauchement d'électrode et par au moins un écart entre électrodes, les excursions d'électrode influençant l'écart entre électrodes et/ou le chevauchement d'électrode et ainsi la valeur de la capacité (C) et, dans le cas d'une oscillation synchrone, le deuxième système oscillant-amortisseur à masse-ressort (S₂) compensant l'influence du premier système oscillant-amortisseur à masse-ressort (S₁) sur la valeur de la capacité (C) et la valeur de la capacité (C) étant utilisée comme grandeur de sortie du détecteur.

10. Procédé selon la revendication 9, **caractérisé en ce que** le détecteur micromécanique (1) présente une électrode en peigne (4) fixe ayant des structures de peigne fixes (5), **en ce que** le premier et le deuxième système oscillant-amortisseur à masse-ressort (S₁, S₂) présentent des structures de peigne mobiles (6, 7) qui viennent en prise dans les structures de peigne fixes (5), la disposition des structures de peigne fixes et mobiles les unes par rapport aux autres, dans le cas d'une oscillation synchrone, permettant d'effectuer, simultanément avec une augmentation de l'écart entre électrodes et/ou une diminution du chevauchement d'électrode des structures de peigne mobiles (6) du premier système oscillant-amortisseur à masse-ressort (S₁) par rapport aux ou avec les structures de peigne fixes (5), avec une diminution de l'écart entre électrodes et/ou une augmentation du chevauchement d'électrode des structures de peigne mobiles (7) du deuxième système oscillant-amortisseur à masse-ressort (S₂) par rapport aux ou avec les structures de peigne fixes (5), et les structures de peigne mobiles (6, 7) étant reliées entre elles de manière électriquement conductrice.

11. Procédé selon la revendication 10, **caractérisé en ce que** le détecteur micromécanique (1') présente l'électrode en peigne (4) fixe ayant des structures de peigne fixes (5) et une électrode en peigne (15) électrostatique fixe supplémentaire ayant des structures de peigne fixes (16) supplémentaires, **en ce que** les structures de peigne mobiles (6, 7) du premier et du deuxième système oscillant-amortisseur à masse-ressort (S₁, S₂) viennent en prise entre les structures de peigne fixes (5) et les structures de peigne fixes (16) supplémentaires, la disposition des structures de peigne fixes et mobiles les unes par rapport aux autres et la disposition centrale des structures de peigne mobiles (16) entre les structures de peigne fixes (5) et les structures de peigne fixes (16) supplémentaires, dans le cas d'une oscillation synchrone, permettant d'effectuer, simultanément avec une augmentation de l'écart entre électrodes et/ou une diminution du chevauchement d'électrode des structures de peigne mobiles (6) du premier système oscillant-amortisseur à masse-ressort (S₁) par rapport aux ou avec les structures de peigne fixes (5) et avec une diminution de l'écart entre électrodes et/ou une augmentation du chevauchement d'électrode des structures de peigne mobiles (6) du premier système oscillant-amortisseur à masse-ressort (S₁) par rapport aux ou avec les structures de peigne fixes (16) supplémentaires, une diminution de l'écart entre électrodes et/ou une augmentation du chevauchement d'électrode des structures de peigne mobiles (7) du deuxième système oscillant-amortisseur à masse-ressort (S₂) par rapport aux ou avec les structures de peigne fixes (5) et une augmentation de l'écart entre électrodes et/ou une diminution du chevauchement d'électrode des structures de peigne mobiles (7) du deuxième système oscillant-amortisseur à masse-ressort (S₂) par rapport aux ou avec les structures de peigne fixes (16) supplémentaires, et les structures de peigne mobiles (6, 7) étant reliées entre elles de manière électriquement conductrice.

12. Procédé selon la revendication 10 ou 11, **caractérisé en ce que** le détecteur micromécanique (1 ") présente une première électrode en peigne (4) fixe ayant des structures de peigne fixes (5) et une deuxième électrode en peigne (4') fixe ayant des deuxièmes structures de peigne fixes (5'), **en ce que** le premier et le deuxième système oscillant-amortisseur à masse-ressort (S₁, S₂) présentent des premières et des deuxièmes structures de peigne mobiles (6, 6', 7, 7'), les premières structures de peigne mobiles (6, 7) venant en prise dans les premières structures de peigne fixes (5) et les deuxièmes structures de peigne mobiles (6', 7') venant en prise dans les deuxièmes structures de peigne fixes (5'), la disposition des premières et des deuxièmes structures de peigne mobiles (6, 6', 7, 7') ainsi que des premières et des deuxièmes structures de peigne fixes (5, 5') les unes par rapport aux autres, dans le cas d'une oscillation synchrone, permettant de réaliser, simultanément avec une augmentation de l'écart entre électrodes et/ou une diminution du chevauchement d'électrode des premières structures de peigne mobiles (6) du premier système oscillant-amortisseur à masse-ressort (S₁) par rapport aux ou avec les premières structures de peigne fixes (5), une diminution de l'écart entre électrodes et/ou une augmentation du chevauchement d'électrode des premières structures de peigne mobiles (7) du deuxième système oscillant-amortisseur à masse-ressort (S₂) par rapport aux ou avec les premières structures de peigne fixes (5), une diminution de l'écart entre électrodes et/ou une augmentation du chevauchement d'électrode des deuxièmes structures de peigne mobiles (6') du premier système oscillant-amortisseur à masse-ressort (S₁) par rapport aux ou avec les deuxièmes structures de peigne fixes (5) et une augmentation de l'écart entre électrodes et/ou une diminution du chevauchement d'électrode des deuxièmes structures de peigne mobiles (6') du deuxième système oscillant-amortisseur à masse-ressort (S₂) par rapport aux deuxièmes structures de peigne fixes (5'), toutes les structures de peigne mobiles (6, 6', 7, 7') étant reliées entre elles de manière électriquement conductrice.

13. Procédé selon la revendication 9, **caractérisé en ce qu'**au moins l'un des systèmes oscillants-amortisseurs à masse-ressort (S₂) du détecteur micromécanique (2, 2') présente un élément de couplage mécanique (8) et une électrode de couplage (9) électrostatique, l'élément de couplage mécanique (8) démultipliant ou amplifiant l'amplitude d'oscillation de l'amortisseur-oscillateur à ressort-masse du système oscillant-amortisseur à masse-ressort (S₂) du détecteur micromécanique (2, 2') à une amplitude d'oscillation plus petite ou plus grande de l'électrode de couplage (9) électrostatique, l'électrode de l'autre système oscillant-amortisseur à masse-ressort (S₁) et l'électrode de couplage (9) électrostatique, dans le cas d'une oscillation synchrone du premier et du deuxième système oscillant-amortisseur à masse-ressort (S₁, S₂), oscillant l'une par rapport à l'autre avec un écart entre électrodes constant et un chevauchement d'électrode constant.

14. Procédé selon la revendication 9, **caractérisé en ce qu'**au moins un amortisseur-oscillateur à ressort-masse (10) du premier système oscillant-amortisseur à masse-ressort (S₁) du détecteur micromécanique (3, 3') oscille dans une direction de mesure (a) à l'intérieur d'un plan d'oscillation et le deuxième système oscillant-amortisseur à masse-ressort (S₂) du détecteur micromécanique (3, 3') présente au moins un amortisseur-oscillateur à ressort-masse (11) qui oscille dans le plan d'oscillation dans une direction oblique pivotée selon un angle de rotation (□) par rapport à la direction de mesure (a), l'amortisseur-oscillateur à ressort-masse (11) pivoté présentant des électrodes en peigne (14) parallèles aux structures de peigne (6) du premier amortisseur-oscillateur à ressort-masse (S₁) et un guide qui lui permet d'effectuer une oscillation dans une direction oblique déterminée par l'angle de rotation (□), les électrodes en peigne (6, 14) du premier et du deuxième système oscillant-amortisseur à masse-ressort (S₁, S₂), dans le cas d'une oscillation synchrone, oscillant l'une par rapport à l'autre avec un écart entre électrodes constant et un chevauchement d'électrode constant.

15. Procédé de fabrication d'un détecteur micromécanique (1, 1', 1 ", 2, 2', 3, 3') selon l'une des revendications 1 à 8, **caractérisé en ce que** le procédé est une technologie de silicium en surface, une technologie de silicium proche de la surface, une technologie de volume de silicium, une technologie LIGA ou un procédé de moulage par microinjection de plusieurs composants.
